# EUROPEAN PATENT APPLICATION

(11) **EP 3 811 813 A1**
(43) Date of publication of application: **28.04.2021**
(21) Application number: 19825908.7
(22) Date of filing: 27.06.2019
(51) Int. Cl.: A45D 20/12, H02K 7/14, H02K 5/00, F04D 25/08

(54) **MOTOR AND HAIR DRYER HAVING SAME**

(30) Priority: 28.06.2018 CN 201821015027 U; 07.02.2019 CN 201920188954 U; 07.02.2019 CN 201920188950 U; 07.02.2019 CN 201920188942 U; 07.02.2019 CN 201920188939 U; 07.02.2019 CN 201920188935 U; 07.02.2019 CN 201920188928 U; 07.02.2019 CN 201910109281; 07.02.2019 CN 201910109276; 07.02.2019 CN 201910109271; 14.02.2019 CN 201910115083; 14.02.2019 CN 201920198658 U; 14.02.2019 CN 201920198275 U
(71) Applicant: Leshow Electronic Technology Co., Ltd., Hangzhou, Zheijiang 310018 (CN)
(72) Inventor: YU, Jinming, Hangzhou, Zhejiang 310018 (CN); YE, Zhiwen, Hangzhou, Zhejiang 310018 (CN); XIAO, Lin, Hangzhou, Zhejiang 310018 (CN); ZHANG, Min, Hangzhou, Zhejiang 310018 (CN)
(74) Representative: Spittle, Mark Charles
(86) International application number: PCT/CN2019/093258
(87) International publication number: WO 2020/001534

(57) **Abstract**

A motor (501) and a hair dryer. The motor (501) comprises a rotor assembly (16) and a stator assembly (15), characterized in that the motor (501) further comprises a support (17) for supporting the rotor assembly (16) and the stator assembly (15), and the rotor assembly (16) is connected to fan blades (502). The support (17) comprises a first cylinder (8) for supporting the rotor assembly (16) and a second cylinder (9) for protecting the fan blades (502). The first cylinder (8) and the second cylinder (9) are connected to each other, and at least a part of the first cylinder (8) is located outside the second cylinder (9). By integrating the fan blades (502) and the motor (501) into one assembly, the assembly step is simplified and the assembly difficulty is reduced. This gives a good user experience.

## Description

### TECHNICAL FIELD

The disclosure relates to the technical field of household appliances, and particularly to a motor and a hair dryer having the same.

### BACKGROUND

With development of society, motors are used in various fields to improve automation level, when the motors are applied to household appliances, weight, cost and performance of the motors directly affect user experience of household appliances.

At present, the motors on market are used as a separate component, when a motor is applied to a hair dryer or other products that need to be blown, a separate fan blade should be installed, which makes the whole assembly process complicated and increases the difficulties in product design and development process, moreover, the existing motors need a larger installation space to achieve a hair dryer function, which makes the whole machine relatively large and bulky.

In addition, during operation of a hair dryer, motor speed affects air pressure and air volume of air blown by the hair dryer, which directly affect the blowing efficiency. Most of the motor speed of the hair dryers on the market is about 20000 rpm. Due to the influence of the performance of the motor and the structure of the hair dryer, the air volume and the air pressure produced by the hair dryer are limited.

### SUMMARY

The technical problem to be solved by the present disclosure is to provide a motor and a hair dryer having the same, in which a fan blade and the motor are integrated into a component by optimizing the structure of the motor, so as to simplify the assembly steps of a whole machine, reduce the assembly difficulties and reduce the volume of the whole machine.

In addition, the motor optimized is assembled in a hair dryer, which can realize miniaturization, reduce air volume loss and air pressure loss, and can also reduce noise and vibration to make user experience better.

To achieve the above purposes, the technical scheme of the invention is as follows:

A motor, comprising a rotor assembly and a stator assembly, the motor further comprising a bracket for supporting the rotor assembly and the stator assembly, wherein the rotor assembly is connected with a fan blade;

the bracket comprises a first cylinder for supporting the rotor assembly and a second cylinder for protecting the fan blade;

the first cylinder is connected with the second cylinder, and at least a part of the first cylinder is located outside the second cylinder.

The advantages are that, by integrating the fan blade and the motor into a component, assembly steps of the whole machine are simplified and assembly difficulty is thus reduced; the volume of the rotor assembly is small, which requires a small installation space, then the volume of the first cylinder can be relatively small; the volume of the fan blade is generally large, which requires the second cylinder with larger volume for protection, so as to make the motor smaller, save materials and reduce costs.

It can be seen from the above description that since at least a part of the first cylinder is located outside the second cylinder (different from the scheme that the first cylinder is completely nested in the second cylinder in the prior art), and the first cylinder is connected with the second cylinder, there are at least three assembly schemes, scheme 1 is most parts of the first cylinder are nested in the second cylinder, a small part of the first cylinder is located outside the second cylinder; scheme 2 is only a small part of the first cylinder is nested in the second cylinder; scheme 3 is the first cylinder is only connected with the second cylinder by a connecting component, and the inner cavity area formed by the second cylinder is far away from the first cylinder, that is, no overlap between the outer wall of the first cylinder and the inner wall of the second cylinder in the radial direction.

Regardless of the above three schemes, at least in each scheme, compared with the prior art that the first cylinder is completely nested in the second cylinder, that is, the first cylinder encapsulates the second cylinder, airflow can only be blown out from the gap between the first cylinder and the second cylinder, the air channel formed by the airflow is small and narrow, and the airflow from a relatively larger air guide duct at a fan blade passes through a smaller and narrow air guide duct momentarily (the gap between the first cylinder and the second cylinder) and enters into an air channel, which makes the first cylinder and the second cylinder need to bear a large air pressure for a long time, which will affect lifetime; moreover, when the airflow passes through the small air guide duct, it may produce noise, which will impact the user's experience.

In the present application, at least a part of the first cylinder is located outside the second cylinder, which ensures that a airflow generated by the fan blade directly enters into a airflow channel after passing through the second cylinder, or the airflow generated by the fan blade enters into the airflow channel after passing through the second cylinder and a gap formed by the first cylinder and the second cylinder, due to the length of the gap is shorter, the airflow passes through the gap rapidly before there is any reaction, the gap will not have a significant impact on a entire air guide duct.

Further, the central axis of the first cylinder and the central axis of the second cylinder are located on the same coaxial line, and the second cylinder is located on one side of the first cylinder.

When the motor is normally placed (the stator assembly is located at a upper part of a longitudinal direction), the second cylinder is located at the bottom of the motor, since the fan blade is arranged in the second cylinder, airflow generated by the fan blade rotation is transmitted upwardly from the bottom of the motor; in addition, the central axis of the first cylinder and the central axis of the second cylinder are located on the same axis, so the central axis of the fan blade is also located in the same axis. when the fan blade rotates, axial suction can be formed, which can further strengthen the airflow speed. The second cylinder located under the first cylinder is preferred.

Further, the inner diameter of the second cylinder is greater than the outer diameter of the first cylinder.

In this way, height difference between the upper end-face of the first cylinder and that of the second cylinder can not only reduce volume, but also ensure support strength; holes defined by the first cylinder and the second cylinder are cylindrical holes, which can reduce air pressure loss when an airflow generated by the fan blade blows out from a gap between the first cylinder and the second cylinder, and it is convenient for the assembling the rotor assembly.

Further, the difference between the outer diameter of the first cylinder and the inner diameter of the second cylinder is D, 1mm≤D≤50mm.

Advantages of 1mm≤D≤50mm is reducing air resistance and increasing air volume; when D < 1mm, it requires high process precision, increases process difficulty, makes system difficult to adapt, and increases the cost; when D>50mm, the motor volume increases and slightly bulky, use experience and aesthetic feeling are reduced, and the air volume and air pressure are reduced.

Further, the distance between the upper end-face of the second cylinder and the lower end-face of the first cylinder is h, the length of the first cylinder is H, 0≤h/H≤0.5.

Further reduce the motor volume while ensuring the support strength, h/H =0, which means that the first cylinder is only connected with the second cylinder through connecting components, and an inner cavity area formed by the second cylinder is far away from the first cylinder, that is, no overlapping area between the outer wall of the first cylinder and the inner wall of the second cylinder in the radial direction; h/H=0.5 indicates that maximum embedding depth of the first cylinder into the second cylinder is half of the length of the second cylinder, which bigger than 0.5 will cause problems such as shorten service life and noise as that in the prior art.

Further, the length of the part of the first cylinder extending into the second cylinder is L, 0.5mm≤L≤5mm.

Advantages are increasing the strength of the bracket, when h<0.5mm, the strength of the bracket is weak; when h>5mm, the length of the motor increases, which occupy a larger installation space.

Further, the first cylinder is connected with the second cylinder by connecting rib(s).

The connecting rib is convenient for processing, which can be set separately, can be integrally formed with the second cylinder, and can also be integrated with the first cylinder and the second cylinder.

Further, at least a part of the connecting rib is connected to the side wall of the first cylinder.

A assembly structure minimizes motor volume. When the lower end-face of the first cylinder and the upper end-face of the second cylinder are in one plane, the connecting ribs are connected with the upper end-face of the second cylinder and the side wall of the first cylinder; when the lower end of the first cylinder extends into the second cylinder, the connecting ribs are connected with the side wall of the first cylinder and the side wall of the second cylinder. Improve the strength of the bracket to ensure motor reliability.

Further, each connecting rib comprises an arc section, and the connecting rib also comprises a vertical section connected with the arc section, and the vertical section is parallel to the center line of the first cylinder.

Through this structure, when airflow enters the air flow channel from the first cylinder, the air loss is reduced; through the vertical sections, the airflow is guided to blow out the airflow channel along the direction of the center line of the first cylinder, and the vertical sections are conducive to reducing air volume loss and air pressure loss.

Further, the arc section has an inner concave part corresponding to the rotation direction of the fan blade.

The inner concave part has a rotation direction as same as the fan blade, during blade rotation, it can strengthen the airflow and reduce the air loss.

Further, the stator assembly is located at the side of the first cylinder far away from the upper end-face of the first cylinder, and the connecting rib is in interference fit with the stator assembly.

The connecting ribs are arranged around the stator assembly to make the motor miniaturized. The side wall of the stator assembly is provided with grooves or convex ribs, and the inner side of the connecting rib is provided with corresponding convex rib or groove. The stator assembly 15 is fixed by interference fit of the groove and the convex rib. Advantages are simple structure and reliable fixation.

Further, the rotor assembly comprises a shaft, a bearing and a magnet, the bearing and the magnet are arranged on the shaft, the fan blade is connected with the shaft, and the magnet is inserted into the stator assembly.

When the shaft rotates, it drives the fan blade to rotate to produce an airflow, and the magnet extends into the stator assembly, which makes the matching more reliable.

Further, the motor comprises a power line electrically connected with a circuit board for controlling and a conductive layer, the circuit board, the conductive layer and the power line form a closed-loop circuit in a working state.

When the motor is working, the conductive layer absorbs electromagnetic radiation generated by the motor, so that the electromagnetic radiation of the motor is transmitted to the corresponding terminals on the circuit board, so as to reduce the electromagnetic radiation generated by the motor, meet the EMC standard, and reduce impact on users.

In addition, the electromagnetic radiation of the motor mainly comes from the power line, which makes the main radiation source shielded and plays the role of reducing the electromagnetic radiation; moreover, it has almost no impact on the motor volume, so that the motor will not occupy internal space of the hair dryer due to the conductive layer; in addition, wrapping the power line is easy to realize in technology.

Further, the conductive layer receives electromagnetic radiation signal from the motor in a non-contact manner.

Position of the conductive layer is more free in use, so as to improve structural adaptability.

Further, the conductive layer at least wraps around the outside of the power line or covers the motor entirely.

The conductive layer covers all components of the motor, which can further absorb the electromagnetic radiation generated by other parts of the motor, so as to further reduce the electromagnetic radiation.

Further, the conductive layer is a conductive coating layer, an aluminum foil layer, or a metal part.

The costs of the above materials are low, and the electromagnetic radiation can be reduced easily.

Further, the bracket and the fan blade are made of plastic; or the bracket is made of plastic and the fan blade is made of aluminum; or the bracket and the fan blade are made of metal.

Metal materials, especially aluminum, zinc and other materials are preferred; the selection of the above materials makes the motor lighter and does not add weight to the product.

When both the bracket and the fan blade are made of plastic materials, weight of the motor is reduced, and the bracket can be molded by injection molding, which makes the processing more easy and more environmentally friendly;

Cost of a plastic bracket is low, and the bracket can be molded by injection molding, which is less difficult to process and more environmentally friendly. An aluminum fan blade can improve matching accuracy of the bracket and the fan blade, and increase the air pressure of the motor.

Further, the second cylinder also comprises an air inlet side and an air outlet side, the first cylinder is arranged at the air outlet side of the second cylinder; the distance between the edge of the fan blade close to the air outlet side and the air outlet side is L1, 0.1mm≤L1≤20mm.

By integrating the fan blade and the motor into one component, assembly steps of a whole machine are simplified and assembly difficulty is reduced; the volume of the rotor assembly is small and requires a small installation space, so the volume of the first cylinder can be relatively small; the volume of the fan blade is generally large, which needs a larger second cylinder to protect, making the motor smaller, saving materials and reducing costs; the airflow generated by the fan blade blows out from a gap between the first cylinder and the second cylinder; by making the distance between the edge of the fan blade close to the outlet side and the outlet side is L1, 0.1mm≤L1≤20mm, Advantages are to obtain appropriate air pressure, and the airflow entering the second cylinder is rectified through the distance, so as to reduce the air volume loss and air pressure loss; when L1≤0.1mm, it can't be effectively adjusted. When L1>20 mm, the distance is too long, and the airflow can't enter into the duct smoothly, which will affect the air volume.

Further, the inner diameter of the second cylinder is D1, 20mm≤D1≤60mm.

Selection of the inner diameter makes the motor obtain an appropriate air volume; when D1<20mm, the air volume obtained is low, which may not meet the demand; when D1>60mm, the motor volume is too large, relatively bulky, and cost increases.

Further, the inner diameter of the first cylinder is D4, 1.5mm≤D4<20mm.

Advantages are to provide a installation space and support for the bearing of the rotor assembly 16, and increase the air inlet volume; when D4<1.5mm, due to technical limitations, it is difficult to find an appropriate size bearing, which increases cost; when D4>20mm, the air resistance increases, resulting in the air volume loss and reduction of the air volume.

Further, the outer diameter of the first cylinder is D5, 3.5mm≤D5<23mm.

Advantages are that the bearing of the rotor assembly 16 is provided with a installation space, enough strength support, and increase the air inlet volume; when D5< 3.5mm, due to technical limitations, it is difficult to find an appropriate size bearing and increase cost, and the wall thickness of the first cylinder 8 is too thin to provide reliable support for the rotor assembly 16, and the matching accuracy of the fan blade 502 and the second cylinder 9 cannot be guaranteed; when D5>23mm, the air resistance increases, resulting in the air volume loss and the reduction of air volume; D1 = 28mm, D4 = 12mm and D5 = 15mm are preferred.

Further, a gap between the fan blade and the side wall of the second cylinder is D2, 0mm<D2≤5mm.

Advantages are that reducing the noise and obtaining a higher air pressure, when D2>5mm, the cavity is easy to release air pressure and the noise is large.

Further, a distance between the edge of the fan blade near the lower end of the second cylinder and the lower end of the second cylinder is D3, 0mm≤D3≤10mm.

Advantages are that ensuring the air inlet volume, when D3 > 10 mm, the air inlet volume per unit time will be greatly affected, which will reduce the air inlet volume per unit time, which may not meet the demand.

Further, the thickness of the connecting rib is d, 0. 1mm≤d≤3mm.

Advantages are that ensuring connection strength of the first cylinder and the second cylinder, reducing the air resistance and reduce the air loss; when d<0.1 mm, the connecting rib is too thin to ensure the connection strength of the first cylinder and the second cylinder, the rotor assembly operates during operation of the motor, the connecting rib is easy to be deformed, which increases the air resistance and may change airflow direction, resulting in the air volume loss and the air pressure loss; when d>3 mm, the air resistance is large and resonance is easy to occur.

Further, the number of the connecting ribs is N, 4≤N≤12.

Advantages are to guide the airflow, obtain an appropriate air direction, reduce the air resistance loss and the air volume loss, and ensure connection reliability between the first cylinder and the second cylinder; when N<4, during the rotor assembly working, a large torque may be generated, which may lead to deformation of the connecting rib, thus increasing the air resistance, changing the airflow direction, resulting in the air volume loss and the air pressure loss; when N>12, the number of the connecting ribs is too large, which increases the air resistance and results in the air volume loss.

Further, the speed of the rotor assembly is n, 70000rpm≤n≤150000rpm.

When the speed of the rotor assembly is in this range, it is called a high-speed motor. In the embodiment, n = 110000rpm.

Further, a hair dryer, comprising a housing, a handle assembly connected with the housing, an air inlet, an air outlet, a fan unit for drawing airflow from the air inlet into the internal part of the hair dryer, and a heating unit for heating the airflow, the fan unit comprises a fan blade and a motor for driving the fan blade to rotate, wherein the motor is as mentioned above;

the motor also comprises a third cylinder which is separated from the bracket, the third cylinder and the first cylinder define an airflow channel.

The third cylinder and the first cylinder define the airflow channel, firstly, the airflow drawn by the fan blade enters the airflow channel from the second cylinder, which can not only realize fixation of the fan unit, but also simplify the structure of the air guide duct, so that the airflow can enter into the hair dryer through the shortest path; moreover, different airflow channel structures can be obtained through designs of the third cylinder, so as to obtain different air volume and air pressure to improve motor adaptability.

Further, the third cylinder comprises a butting part, and the butting part is against the second cylinder.

The airflow entering the second cylinder is prevented from leaking from a junction of the second cylinder and the third cylinder, which resulting in the air volume loss and the air pressure loss.

Further, the butting part is at least in contact with the upper end-face of the second cylinder.

Assembly method is simple and process is optimized.

Further, the third cylinder and the second cylinder have same inner diameters at the part where the both are contacted with each other.

Reducing the air resistance of the airflow from the second cylinder to the airflow channel or from the airflow channel to the second cylinder, and reducing the air loss.

Further, the upper end-face of the first cylinder is located in the third cylinder;

or, the upper end-face of the first cylinder is flush with the upper end-face of the third cylinder;

or, the upper end-face of the first cylinder is higher than the upper end-face of the third cylinder.

By making the upper end-face of the first cylinder located in the third cylinder, when the stator assembly is installed above the first cylinder, total length of the motor is reduced, and the structure of the motor is more compact; on the other hand, the airflow through the airflow channel is rectified;

By making the upper end-face of the first cylinder flush with the upper end-face of the third cylinder, advantages are that the air volume and the air pressure of the airflow through the airflow channel remain basically unchanged;

By making the upper end-face of the first cylinder higher than the upper end-face of the third cylinder, so as to guide the airflow into the air flow channel.

Further, the tail end of the connecting rib exceeds or is flush with the upper end-face of the third cylinder.

The connection strength between the upper cylinder and the lower cylinder is improved; on the other hand, the connecting rib guide the airflow, so as to reduce the noise, the air volume loss and the air pressure loss.

Further, the third cylinder is in interference fit with the connecting rib; or, the third cylinder and the second cylinder are fixed by screws.

The airflow through the airflow channel is guided by the inner wall of the third cylinder, the outer wall of the first cylinder and the two side walls of the connecting rib, so as to reduce the air pressure loss, and improve coordination reliability of the third cylinder and the motor.

By fixing the third cylinder and the second cylinder with screws, the assembly reliability is improved, and the structure is simple and the assembly is easy.

Further, the third cylinder is a high temperature resistant plastic part or a sound-absorbing metal part.

Because the heating unit generates high-temperature heat during working, and the airflow will take away the high-temperature heat after passing through the heating unit. the third cylinder is made of a high-temperature resistant plastic part, which can prolong service life of the motor; the third cylinder is made as a sound-absorbing metal part is to prolong the service life of the motor, improve the structural strength and absorb the noise during operation of the motor.

Further, the hair dryer also comprises an air guide duct, and the third cylinder is arranged in the air guide duct.

By setting the third cylinder in the air guide duct of the electric hair dryer, advantages are that the airflow drawn by the fan unit from the air inlet can directly enter the air guide duct, so as to reduce the air loss; moreover, it can reduce vibration from the handle assembly during the operation of the motor.

Further, the air guide duct is a silicone tube, and the third cylinder is a high temperature resistant plastic part or a sound-absorbing metal part.

The air guide duct is a silicone tube, which can reduce vibration and noise.

Further, the rotor assembly is arranged in the third cylinder, the inner diameter of the first cylinder is larger than the outer diameter of the second cylinder, and the outer diameter of the third cylinder is smaller than the inner diameter of the second cylinder.

The embodiment gives different installation methods of the motor in the hair dryer, and defines assembly relationship between the first cylinder, the second cylinder and the third cylinder.

Further, a hair dryer, comprising a housing, a handle assembly connected with the housing, an air inlet, an air outlet, a fan unit for drawing airflow from the air inlet into the hair dryer, and a heating unit for heating the airflow, the fan unit comprises a fan blade and a motor for driving the fan blade to rotate, wherein the motor adopted as mentioned above;

the motor also comprises an air guide duct, and the airflow drawn by the fan unit enters into the air guide duct through the second cylinder.

The airflow is entered the electric hair dryer through the fan unit and directly transported through the air guide duct. On the one hand, the air guide duct forms a seal, and probability of the airflow entering the hair dryer from the air inlet is reduced from the assembly gap, so as to reduce the air volume loss and the air pressure loss; when electronic devices are installed on the handle assembly, the assembly place of the handle assembly and the electronic device need not be separately sealed, so as to simply the structure; the air guide duct can also buffer sound of the airflow in the main air guide duct, reduce the noise and reduce the vibration.

In addition, when the fan blade rotates, the airflow is entered the air guide duct from the second cylinder, and the airflow sucked by the fan unit is rectified by the second cylinder, which effectively ensures the air volume and the air pressure, and reduces the noise.

Further, the second cylinder comprises an air inlet side and an air outlet side, and the fan blade is rotated to make the air flowed into the second cylinder from the air inlet side and into the air guide duct through the air outlet side.

By making the first cylinder at the outlet side of the second cylinder, the second cylinder is closer to the air inlet, which is conducive to increasing the air volume and the air pressure.

Further, the second cylinder is arranged in the air guide duct.

The airflow entering the second cylinder enters the air guide duct from the air outlet side, which will not cause the air volume loss and the air pressure loss due to an axial gap between the second cylinder and the air guide duct, so as to effectively ensure the air volume and the air pressure of the hair dryer, and reduce the noise; in addition, the vibration of the second cylinder can be isolated through the air guide duct to further reduce the noise.

Further, the air guide duct and the first cylinder define an airflow channel, and the fan blade is rotated to make the air flowed into the second cylinder from the air inlet side and entered into the airflow channel through the air outlet side.

The air guide duct and the first cylinder are used to limit the airflow channel, advantages are simple structure, low cost, light weight of the motor, and thus lighter weight of the whole machine, so as to improve the user experience.

Further, a hair dryer, comprising a housing, a handle assembly connected with the housing, an air inlet, an air outlet, a fan unit for drawing airflow from the air inlet into the internal part of the hair dryer, and a heating unit for heating the airflow, the fan unit comprises a fan blade and a motor for driving the fan blade to rotate, wherein the motor adopted as mentioned above;

the motor is arranged in the handle assembly, the air inlet is arranged on the handle assembly, and the air inlet is located under the second cylinder.

The fan blade generally has a large volume, so it needs a larger installation space, the rotor assembly is relatively small, so it needs a small installation space, this structure can reduce the motor volume, which needs a smaller installation space and is conducive to miniaturization of the hair dryer, it is possible to set the motor of the structure in the handle assembly of the hair dryer, the air inlet is arranged on the handle assembly, so that long hair of a lady is not easily sucked into the hair dryer during hair blowing process, and the second cylinder is arranged above the air inlet, which is conducive to obtaining more air volume.

Further, the second cylinder comprises an air inlet side and an air outlet side, the first cylinder is arranged on the air outlet side of the second cylinder, the motor is arranged in the handle assembly, the air inlet is arranged on the handle assembly, and the air inlet is arranged below the air inlet side.

By setting the first cylinder on the air outlet side of the second cylinder, the airflow drawn by the fan blade enters the second cylinder and can be guided through the outer wall of the first cylinder after being blown out from the air outlet side; on the other hand, the fan blade is generally large in volume, so a large installation space is required, and the rotor assembly is relatively small in volume, so a small installation space is required, the first cylinder is arranged in the air outlet side of the second cylinder, the air outlet side of the second cylinder can reduce the motor volume, which is conducive to the miniaturization of the hair dryer; Because the motor with the structure has a small volume, it is possible to set the motor of the structure in the handle assembly of the hair dryer, and the air inlet is arranged on the handle assembly, so that during the hair blowing process, long hair is not easy to be sucked into the hair dryer, the motor is located above the air inlet to obtain more air volume.

Further, the handle assembly comprises an inner handle and an outer handle arranged on the outside of the inner handle, the inner handle comprises an opening, the motor is arranged in the opening, and the outer handle is covered the opening;

or, the handle assembly comprises an inner handle and an outer handle mounted on the outside of the inner handle, the inner handle comprises a first inner handle and a second inner handle split along the axis direction of the handle assembly, and the motor is arranged in the inner handle.

The external handle covers connecting line and opening on the inner handle to make appearance of the hair dryer more beautiful; the motor is arranged in the opening of the inner handle to facilitate motor installation;

By making the inner handle include the first inner handle and the second inner handle split along the axis direction, the motor installation is convenient and motor fixing is more reliable.

Further, A hair dryer, comprising a housing, a handle assembly connected with the housing, an air inlet, an air outlet, a fan unit for drawing airflow from the air inlet into the internal part of the hair dryer, and a heating unit for heating the airflow, the fan unit comprises a fan blade and a motor for driving the fan blade to rotate, wherein the motor adopted as mentioned above;

the hair dryer also comprising an EMC shielding structure, the EMC shielding structure comprises a circuit board for controlling the hair dryer, the motor is electrically connected with the circuit board by the power line, the circuit board, the conductive layer and the power line form a closed-loop circuit.

The circuit board, the conductive layer and the power line form a closed-loop circuit, electromagnetic radiation generated by the motor during operation is absorbed, and the electromagnetic radiation of the motor is transmitted to the corresponding terminals on the circuit board, so as to reduce the electromagnetic radiation generated by the hair dryer during operation, meet the EMC standards, reduce the impact on users, especially the electromagnetic radiation of the hair dryer on pregnant women and infants.

Further, the conductive layer comprises a conductive hose which is sheathed outside the motor.

By making the conductive layer include the conductive hose, and the conductive hose is sheathed outside the motor, it can not only weaken the electromagnetic radiation, but also guide the airflow into internal of the hair dryer by the fan unit, reduce the air volume loss and the air pressure loss, and reduce the noise and vibration generated during the operation of the motor.

Further, the power line is arranged in the handle assembly, the handle assembly comprises an inner handle and an outer handle arranged on the outside of the inner handle, the conductive layer is arranged between the inner handle and the outer handle, or the conductive layer is arranged in the inner handle;

or, the power supply line is arranged in the handle assembly, the handle assembly comprises the inner handle and the outer handle arranged outside the inner handle, and the inner handle is at least partially made of metal, and the conductive layer comprises the inner handle.

The assembly mode of the power line and conductive layer are given above, which can be modified and adjusted according to the design requirements.

Further, the motor comprises a metal housing, the conductive layer comprises the metal housing, the metal housing is provided with a grounding terminal, and the grounding terminal is electrically connected with the circuit board.

The electromagnetic radiation signal of the motor is transmitted to the circuit board through the metal housing, so as to realize purpose of absorbing the electromagnetic radiation.

Further, the EMC shielding structure also comprises a wiring terminal, which is connected with the ground terminal.

The electric connection between the grounding terminal and the circuit board is realized through the wiring terminal. The structure is simple and easy to realize.

Further, the grounding terminal is a convex rib or a groove arranged on the side wall of the metal housing;

or, the metal housing has a notch arranged along the axial direction of the metal housing, a convex part with a through hole is arranged in the notch, and the grounding terminal is the convex part.

In this embodiment, a simple assembly between the wiring terminal and the metal housing is given.

Further, the conductive layer and the circuit board are both arranged in the handle assembly;

or, the conductive layer and the circuit board are both arranged in the housing;

or, the conductive layer and the circuit board are respectively located in the handle assembly and the housing;

or, the conductive layer and the circuit board are respectively located in the housing and the handle assembly.

Different installation positions of the conductive layer and the circuit board are given, and corresponding adjustment is made according to actual needs.

Further, the circuit board is provided with an EMC filter circuit, and an electromagnetic radiation signal from the motor is received by the conductive layer and transmitted to the input end of the EMC filter circuit.

An electromagnetic radiation signal is processed by the EMC filter circuit to achieve the purpose of absorbing the electromagnetic radiation.

It is to be understood that the above general description and the following detailed description are merely exemplary and explanatory, but do not limit the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a stereoscopic diagram of a motor according to the present invention.
FIG. 2 is a stereoscopic diagram of a motor according to the exemplary embodiment 1.
FIG. 3 is an exploded diagram of a motor according to the exemplary embodiment 1.
FIG. 4 is a cross-sectional diagram of a rotor assembly of a motor according to the exemplary embodiment 1.
FIG. 5 is a working schematic diagram of a motor according to the exemplary embodiment 2.
FIG. 6 is a stereoscopic diagram of a motor according to the exemplary embodiment 3.
FIG. 7 is a cross-sectional diagram of a motor according to the exemplary embodiment 3.
FIG. 8 is a dimension relation diagram corresponding to a transverse section of a motor according to the exemplary embodiment 4.
FIG. 9 is a dimension relation diagram corresponding to a longitudinal section of a motor according to the exemplary embodiment 4.
FIG. 10 is a structural diagram of a whole machine structure of a hair dryer according to the exemplary embodiment 5.
FIG. 11 is a sectional view of a motor according to the exemplary embodiment 5.
Figure 12 is an enlarged view of A in FIG. 11.
FIG. 13 is an assembly diagram of a motor and an air guide duct according to the exemplary embodiment 5.
FIG. 14 is an assembly exploded diagram of a motor and an air guide duct according to the exemplary embodiment 5.
FIG. 15 is a assembly sectional diagram of a motor and an air guide duct according to the exemplary embodiment 5.
FIG. 16 is an enlarged view of B in FIG. 15.
FIG. 17 is a structural diagram of a motor according to the exemplary embodiment 5.
FIG. 18 is a sectional view of a motor according to the exemplary embodiment 5.
FIG. 19 is an explosion diagram of a handle assembly of a hair dryer according to the exemplary embodiment 5.
FIG. 20 is an explosion diagram of another structure of a handle assembly of a hair dryer according to the exemplary embodiment 5.
FIG. 21 is a structural diagram of a motor according to the exemplary embodiment 6.
FIG. 22 is a sectional view of a motor according to the exemplary embodiment 6.
FIG. 23 is a structural diagram of a motor according to the exemplary embodiment 7.
FIG. 24 is an exploded view of a motor according to the exemplary embodiment 7.
FIG. 25 is a sectional view of a motor according to the exemplary embodiment 7.
FIG. 26 is a sectional view of a motor according to the exemplary embodiment 8.
FIG. 27 is a local explosion diagram of a hair dryer according to the exemplary embodiment 9.
FIG. 28 is a use state diagram of a motor according to the exemplary embodiment 9.
FIG. 29 is a stereoscopic diagram of a motor according to the exemplary embodiment 10.

Corresponding part name indicated by numbers and letters in the figures:

1. housing; 2. handle assembly; 201. inner handle; 202. outer handle; 203. opening; 204. first inner handle; 205. second inner handle; 3. air inlet; 4. air outlet; 5. fan unit; 501. motor; 502. fan blade; 6. heating unit; 7. air guide duct; 8. first cylinder; 9. Second cylinder; 901. fixed structure; 10. connecting rib; 1001. arc section; 1002. vertical section; 1003. inner concave part; 11. third cylinder; 12. airflow channel; 13. air inlet side; 14. air outlet side; 15. stator assembly; 16. rotor assembly; 1601. magnet; 17. bracket; 18. conductive layer; 19. circuit board; 20. wire; 21. power line; 22. wiring terminal; 23. conductive tube; 24. metal housing; 25. grounding terminal

### DETAILED DESCRIPTION OF EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

It is to be understood that "first," "second" and similar terms used in the specification and claims are not to represent any sequence, number or importance but only to distinguish different parts. Likewise, similar terms such as "a" or "an" also do not represent a number limit but represent "at least one". It is also to be understood that term "and/or" used in the present disclosure refers to and comprises one or any or all possible combinations of multiple associated items that are listed.

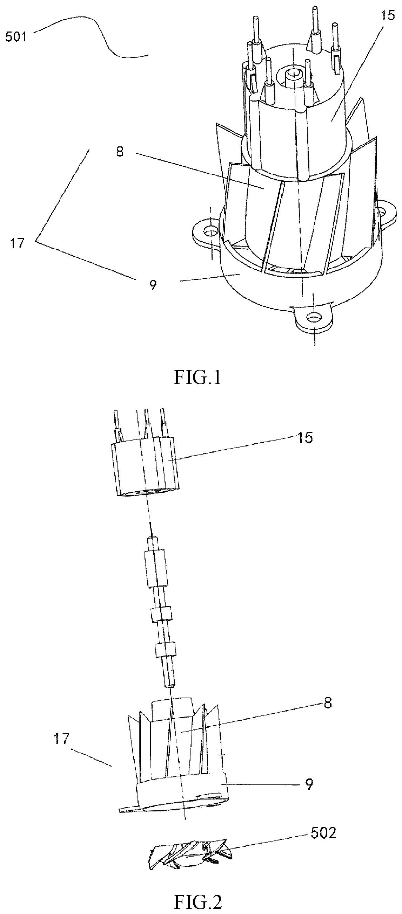

As shown in FIG. 1, a motor 501, comprising a rotor assembly 16 and a stator assembly 15, wherein, the motor 501 also comprises a bracket 17 for supporting the rotor assembly 16 and the stator assembly 15, and the rotor assembly 16 is connected with a fan blade 502; the bracket 17 comprises a first cylinder 8 for supporting the rotor assembly 16 and a second cylinder 9 for protecting the fan blade; the first cylinder is connected with the second cylinder, and at least a part of the first cylinder 8 is located outside the second cylinder 9.

The connection refers to a interconnection between the first cylinder and the second cylinder, which can be formed an integrated body, or the first cylinder is assembly connected with the second cylinder by other structures, or the other structures are formed by a extension part of the first cylinder or the second cylinder.

At least a part of the first cylinder 8 is located outside the second cylinder 9, that is, a assembly method is different from a structure of the first cylinder nested on the second cylinder in the prior art.

Advantages are that, by integrating the fan blade and the motor into a component, assembly steps of a whole machine are simplified and assembly difficulty is reduced; the volume of the rotor assembly is small, which requires a small installation space, then the volume of the first cylinder can be relatively small; the volume of the fan blade is generally large, which requires the second cylinder with larger volume for protection, so as to make the motor smaller, save materials and reduce costs.

It can be seen from the above description that since at least a part of the first cylinder is located outside the second cylinder (different from the scheme that the first cylinder is completely nested in the second cylinder in the prior art), and the first cylinder is connected with the second cylinder, there are at least three assembly schemes, scheme 1 is most parts of the first cylinder are nested in the second cylinder, a small part of the first cylinder is located outside the second cylinder; scheme 2 is only a small part of the first cylinder is nested in the second cylinder; scheme 3 is the first cylinder is only connected with the second cylinder by a connecting component, and the inner cavity area formed by the second cylinder is far away from the first cylinder, that is, no overlap between the outer wall of the first cylinder and the inner wall of the second cylinder in the radial direction.

Regardless of the above three schemes, at least in each scheme, compared with the prior art that the first cylinder is completely nested in the second cylinder, that is, the first cylinder encapsulates the second cylinder, airflow can only be blown out from the gap between the first cylinder and the second cylinder, a air channel formed by the airflow is smaller, and the airflow from a larger air guide duct at a fan blade passes through a smaller air guide duct momentarily (a gap between a first cylinder and a second cylinder) and enters into a air channel, which makes the first cylinder and the second cylinder need to bear a large air pressure for a long time, which will affect lifetime; moreover, when the airflow passes through the small air guide duct, it may produce noise, which will impact the user's experience.

In the present application, at least a part of the first cylinder is located outside the second cylinder, which ensures that a airflow generated by the fan blade directly enters into a airflow channel after passing through the second cylinder, or the airflow generated by the fan blade enters into the airflow channel after passing through the second cylinder and a gap formed by the first cylinder and the second cylinder, due to the length of the gap is shorter, the airflow passes through the gap rapidly before it shows any reaction, the gap will not have a significant impact on a entire air guide duct.

### Embodiment 1

As shown in FIG. 2, scheme 2 is adopted: only a small part of the first cylinder is nested in the second cylinder, more specifically, when the first cylinder 8 and the second cylinder 9 are projected on a plane perpendicular to the axis, the projection of the second cylinder 9 surrounds the projection of the first cylinder 8; the first cylinder 8 and the second cylinder 9 are staggered by a certain distance along the axis, so as to make the direction along the axis of the motor (the central axis of the first cylinder and the central axis of the second cylinder are located on same the coaxial line) has a up position and a down position (which is different from the way in which the first cylinder is nested on the second cylinder in the prior art).

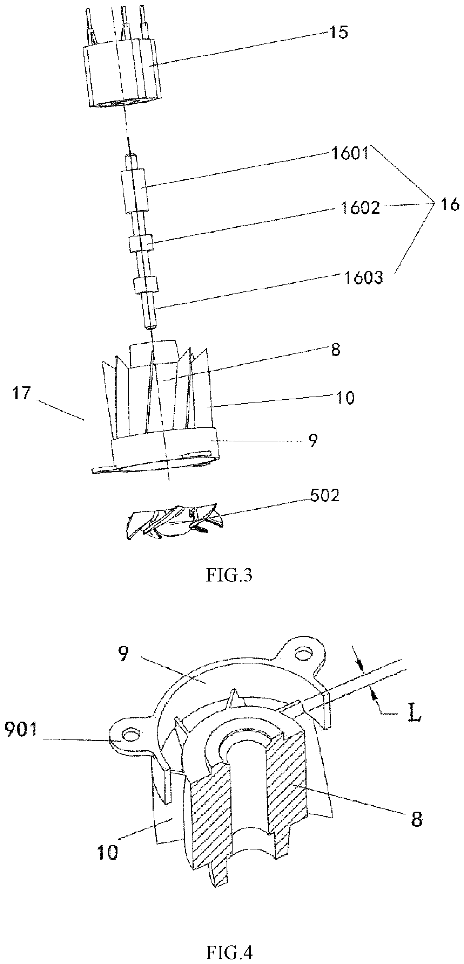

As shown in FIG. 3, further, the second cylinder 9 is arranged around the first cylinder 8 and connected with the first cylinder 8by connecting ribs 10, and is located under the first cylinder 8.

The rotor assembly 16 comprises a shaft 1603, a bearing 1602 and a magnet 1601, the bearing 1602 and the magnet 1601 are arranged on the shaft 1603, the fan blade 502 is connected with the shaft 203, and when the shaft 203 rotates, the fan blade is driven to rotate to generate an airflow.

The first cylinder defines a through-hole for supporting the rotor assembly; the second cylinder defines a holding space for accommodating the fan blade; the center of the first cylinder 8 forms a hole, the rotor assembly 16 penetrates through the hole, the stator assembly 15 is arranged above the first cylinder 8 and is connected with the first cylinder 8, the stator assembly 15 and the first cylinder 8 can be connected by screws, buckles, rivets, etc. The second cylinder 9 covers the fan blade to protect the fan blade from damage.

The first cylinder 8 and the second cylinder 9 are hollow pipes, the first cylinder 8 comprises a first cavity for accommodating the rotor assembly 16, the second cylinder 9 comprises a second cavity for accommodating the fan blade 502, the first cavity can be a cylindrical hole, or a square hole, or a hole of other shapes; the second cavity is a cylindrical hole.

The outer wall of the first cylinder 8 can be a multi-combination of arc side walls and straight side walls, the straight side walls are used to extend the connecting rib 10, and side walls between the connecting rib 10 are the arc side walls.

The inner wall of the second cylinder 9 can be a multi-combination of arc side walls and straight side walls, the straight side walls are corresponding to the positions of connecting rib 10, and side walls between the connecting rib 10 are the arc side walls.

Further, the difference value between the outer diameter of the first cylinder and the inner diameter of the second cylinder is D, 1mm≤D≤50 mm. The advantages of 1mm≤D≤50mm is reducing air resistance and increasing air volume; when D<1mm, it requires high process precision, increases process difficulty, makes system difficult to adapt, and increases the cost; when D>50mm, the motor volume increases and slightly bulky, use experience and aesthetic feeling are reduced, and the air volume and air pressure are reduced. The inner diameter of the second cylinder 9 is larger than the outer diameter of the first cylinder 8, and the upper end-face of the first cylinder 8 is located above the second cylinder 9. The second cylinder 9 is provided with a cylindrical hole, and the outer wall of the first cylinder 8 is cylindrical.

Vertical distance between the upper end-face of the second cylinder 9 and the lower end-face of the first cylinder 8 is h, the length of the first cylinder 8 is H, 0≤h/H≤0.5, the lower end of the first cylinder 8 extends into the second cylinder 9, and the connecting rib 10 connect the side wall of the first cylinder 8 and the side wall of the second cylinder 9, and h/H is less than or equal to 0.5 and greater than zero. The length of the first cylinder 8 extending into the second cylinder 9 is L, 0.5mm≤L≤5mm, in the embodiment, L= 2mm.

It can be understood that when the lower end-face of the first cylinder 8 and the upper end-face of the second cylinder 9 are in a plane, the connecting ribs 10 are connected with the upper end-face of the second cylinder 9 and the side wall of the first cylinder 8, and h/H is zero.

The bracket 17 and the fan blade can be both made of plastic; or the bracket 17 can be formed of plastic and the fan blade is made of aluminum; or the bracket 17 can be made of metal, the fan blade is made of metal or plastic.

The rotor assembly comprises a magnet 201, when the bracket 17 is made of metal, the upper end-face of the second cylinder 9 is located below the magnet 201, which can support the rotor assembly 16 and reduce influence of the metal bracket 17 on magnetic field, so as to improve the rotated speed of the rotor assembly 16. More specifically, when the bracket 17 is made of metal, lead alloy and zinc alloy are preferred, when the fan blade can be made of metal, aluminum or other materials are preferred.

The rotating speed of the rotor assembly is n, 70000rpm≤n≤150000rpm. When the rotated speed is in the range,the rotor assembly is called as the motor 501, in the embodiment, n = 110000rpm.

As shown in FIG. 4, the second cylinder 9 is provided with a fixed structure 901 for installing in a hair dryer. Advantages are that the motor 501 is provided with an installation structure, which makes the assembly of the motor 501 and the hair dryer more simple.

### Embodiment 2

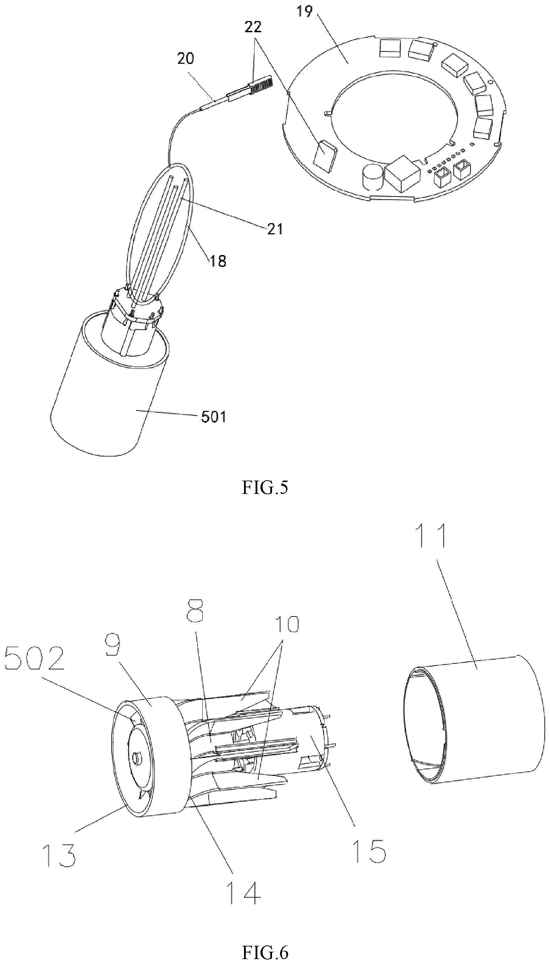

In order to reduce the electromagnetic radiation of the motor, as shown in FIG. 5, the motor 501 comprises a power line 21 electrically connected with a circuit board 19 for controlling and a conductive layer 18. The circuit board 19, the conductive layer 18 and the power line form a closed-loop circuit in a working state.

The power line 21 is connected with the circuit board 19 and a wiring terminal 22 by a wire 20. When the motor is working, the conductive layer absorbs the electromagnetic radiation generated by the motor during working, so that the electromagnetic radiation of the motor is transmitted to corresponding terminals on the circuit board, so as to reduce the electromagnetic radiation generated by the motor during using, match EMC standard, and reduce impact on users.

In addition, the electromagnetic radiation of the motor mainly comes from a power line, the structure described above makes main radiation source shielded and reduces the electromagnetic radiation; moreover, it has almost no impact on the volume of the motor, so that the motor will not occupy the internal space of the hair dryer due to the setting of the conductive layer; in addition, wrapping the power line is easy to realize in technology.

The conductive layer 18 receives an electromagnetic radiation signal from the motor 501 in a non-contact manner. The setting position of the conductive layer is more free in use, and structural adaptability is improved.

Further, the conductive layer 18 is at least wrapped outside the power line 21, or the conductive layer wraps the entire motor.

That is, the conductive layer 18 encapsulates all the components of the motor, which can further absorb electromagnetic radiation generated by other parts of the motor, so as to further reduce the electromagnetic radiation.

The conductive layer 18 can be one of a conductive coating layer, an aluminum foil layer, or a metal part. The above materials are cheap and easy to reduce the effect of the electromagnetic radiation.

### Embodiment 3

Based on the embodiment 1, in addition to the first cylinder 8 and the second cylinder 9, the bracket comprises a third cylinder 11, so as to better realize the function of the motor.

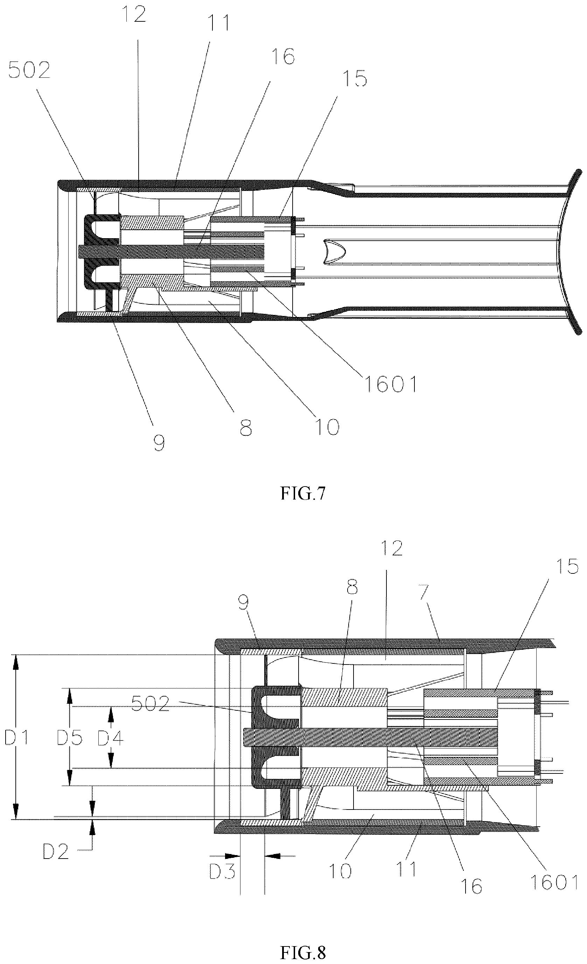

As shown in FIG. 6 and FIG. 7, the motor also comprises a third cylinder 11 separated from the bracket, and the third cylinder 11 and the first cylinder 8 define an airflow channel 12.

The third cylinder 11 comprises a butting part which is against the second cylinder, so as to prevent an airflow into the second cylinder from leaking from the junction of the second cylinder and the third cylinder, which resulting in air volume loss and air pressure loss.

The butting part is at least in contact with the upper end-face of the second cylinder 9. The assembly scheme is simple and the process is optimized. Preferably, the inner diameter of the third cylinder 11 contacted with the second cylinder 9 equals to the inner diameter of the second cylinder 9. Air resistance of an airflow from the second cylinder into the airflow channel 12 or an airflow from the airflow channel into the second cylinder is minimized so as to reduce the air volume loss.

### Embodiment 4

Based on the embodiments 1 to 3, this embodiment gives a dimensional relationship of various parts of the motor.

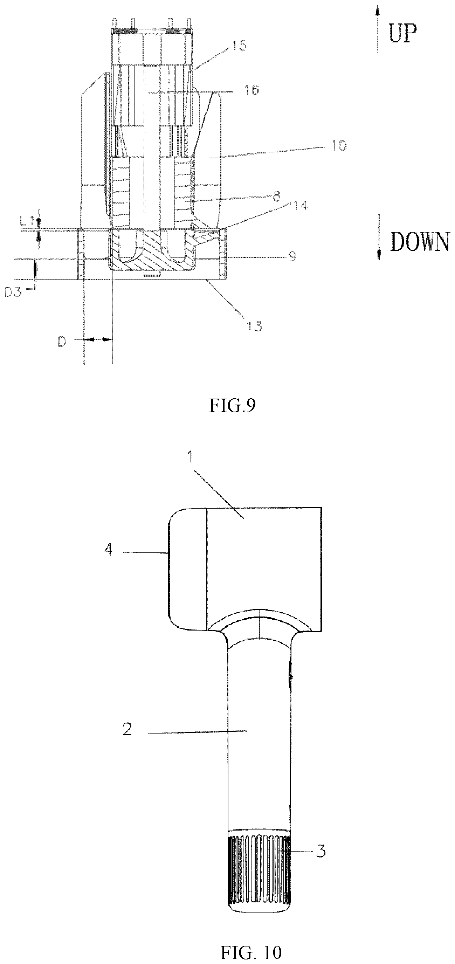

As shown in FIG. 8 and FIG. 9, the second cylinder 9 also comprises an air inlet side 13 and an air outlet side 14, and the first cylinder is arranged on the air outlet side of the second cylinder; the distance between the edge of the fan blade close to the air outlet side and the air outlet side is L1, 0.1 mm≤L1≤20 mm.

By integrating the fan blade and the motor into a component, assembly steps of a whole machine are simplified and assembly difficulty is reduced; the volume of the rotor assembly is small, which requires a small installation space, then the volume of the first cylinder can be relatively small; the volume of the fan blade is generally large, which requires the second cylinder with larger volume for protection, so as to make the motor smaller, save materials and reduce costs.

Another Advantages are making an airflow generated by the fan blade blown out from a gap between the first cylinder and the second cylinder; the distance between the edge of the fan blade close to the outlet side and the outlet side is L1, 0.1mm≤L1≤20mm, advantages are to obtain appropriate air pressure, and the airflow entering the second cylinder is rectified by the distance, so as to reduce the air volume loss and the air pressure loss; when L1≤0.1mm, it can not be effectively adjusted, the air pressure is not improved obviously, and a part of the airflow without rectification enters the air guide duct from the air outlet side and collides with the inner wall of the air guide duct, which resulting in the air volume loss; When L1>20 mm, the distance is too long, and the airflow can not enter into the air guide duct smoothly, which will affect air inlet volume.

Preferably, the inner diameter of the second cylinder is D1, 20mm≤D1≤60mm. The selection of the inner diameter makes the motor obtained appropriate air volume; when D1< 20mm, the air volume obtained is low, which may not meet demand; when D1> 60mm, the motor volume is too large, relatively bulky, and the cost increases.

Preferably, the inner diameter of the first cylinder is D4, 1.5mm≤D4<20mm. Advantages are to provide a installation space and support for the bearing of the rotor assembly 16, and increase the air inlet volume; when D4<1.5mm, due to technical limitations, it is difficult to find a bearing with appropriate size, which increases the cost; when D4>20mm, the air resistance increases, resulting in the air volume loss and the reduction of the air volume.

Preferably, the outer diameter of the first cylinder is D5, 3.5mm≤D5<23mm. Advantages are to provide a installation space and enough strength support for the bearing of the rotor assembly 16, and increase the air inlet volume; when D5<3.5mm, due to technical limitations, it is difficult to find a bearing with appropriate size, which increases the cost, and the wall thickness of the first cylinder 8 is too thin to provide reliable support for the rotor assembly 16, and matching accuracy of the fan blade 502 and the second cylinder 9 cannot be guaranteed; When D5>23mm, the air resistance increases, resulting in the air volume loss and reduction of the air volume; D1=28mm, D4=12mm and D5=15mm are preferred.

Preferably, a gap between the fan blade and the side wall of the second cylinder is D2, 0mm<D2≤5mm. Advantages are to reduce noise and improve the pressure. When D2>5mm, the cavity is easy to release the air pressure and the noise is large.

Preferably, a distance between the edge of the fan blade near the lower end of the second cylinder and the lower end of the second cylinder is D3, 0mm≤D3≤10mm. Advantages are to ensure the air inlet volume When D3 > 10mm, the air inlet volume per unit time will be greatly affected, which reduce the air inlet volume per unit time, which may not meet the demand.

Preferably, the thickness of the connecting rib is d, 0.1mm≤d≤3mm, which ensures connection strength of the first cylinder and the second cylinder, reduces the air resistance and reduce the air volume loss; when d≤0.1mm, the connecting rib is too thin to ensure the connection strength of the first cylinder and the second cylinder, the rotor assembly rotates during operation of the motor, the connecting rib is easy to be deformed, which increases the air resistance and may change the airflow direction, resulting in the air volume loss and the air pressure loss; when d>3 mm, the air resistance is large and resonance is easy to occur.

Preferably, the number of the connecting ribs is N, 4≤N≤12, advantages are to guide the airflow, obtain an appropriate air direction, reduce the air resistance loss and the air volume loss, and ensure connection reliability between the first cylinder and the second cylinder; when N<4, during the rotor assembly working, a large torque may be generated, which may lead to deformation of the connecting ribs, thus increasing the air resistance, changing the airflow direction, resulting in the air volume loss and the air pressure loss; when N>12, the number of the connecting ribs is too large, which increases the air resistance and results in the air volume loss.

### Embodiment 5

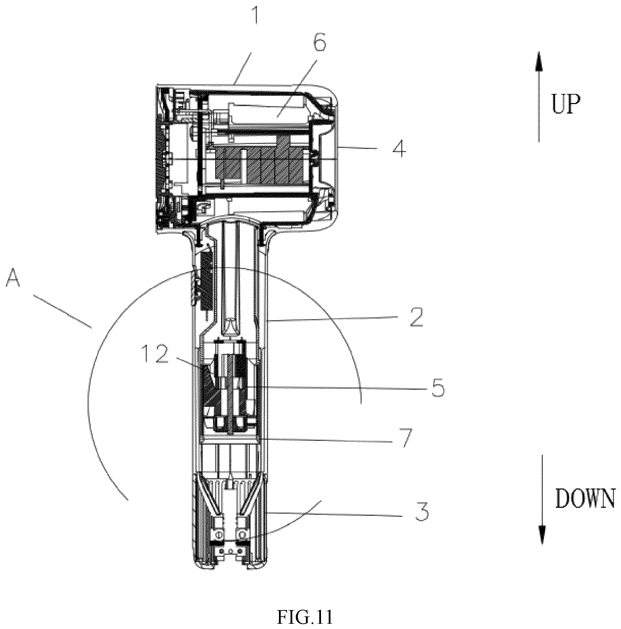

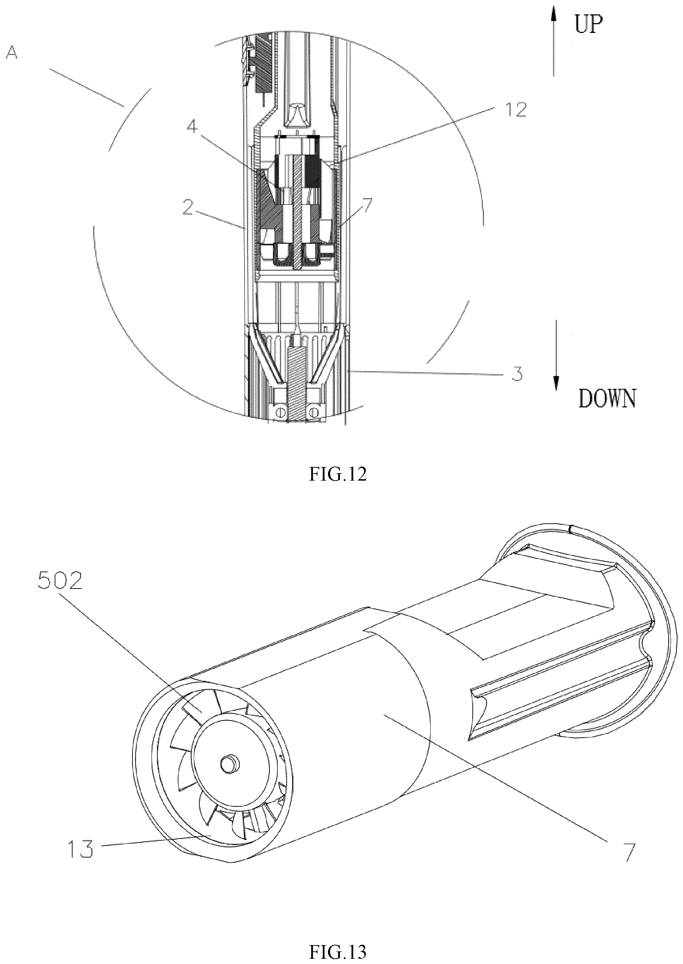

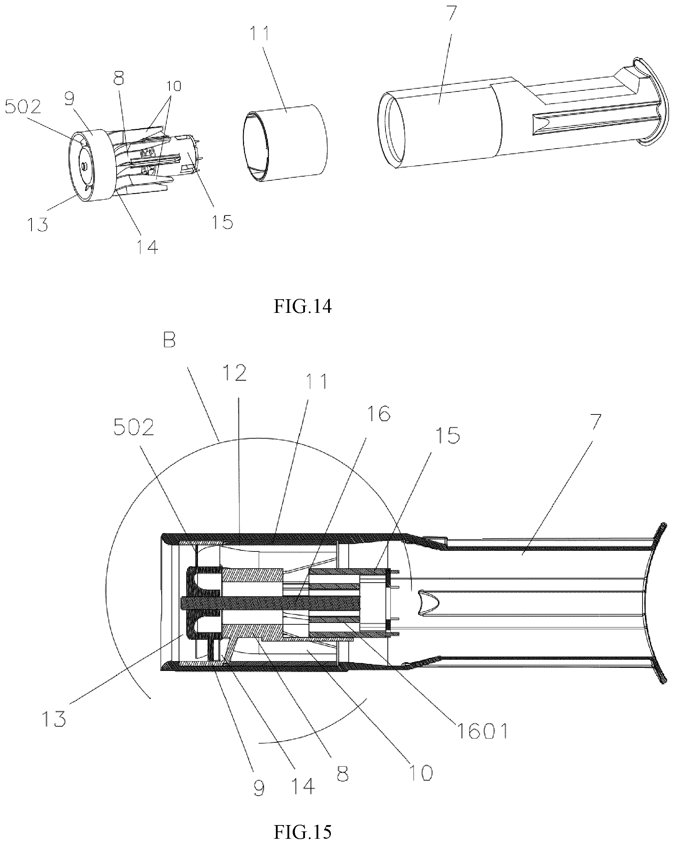

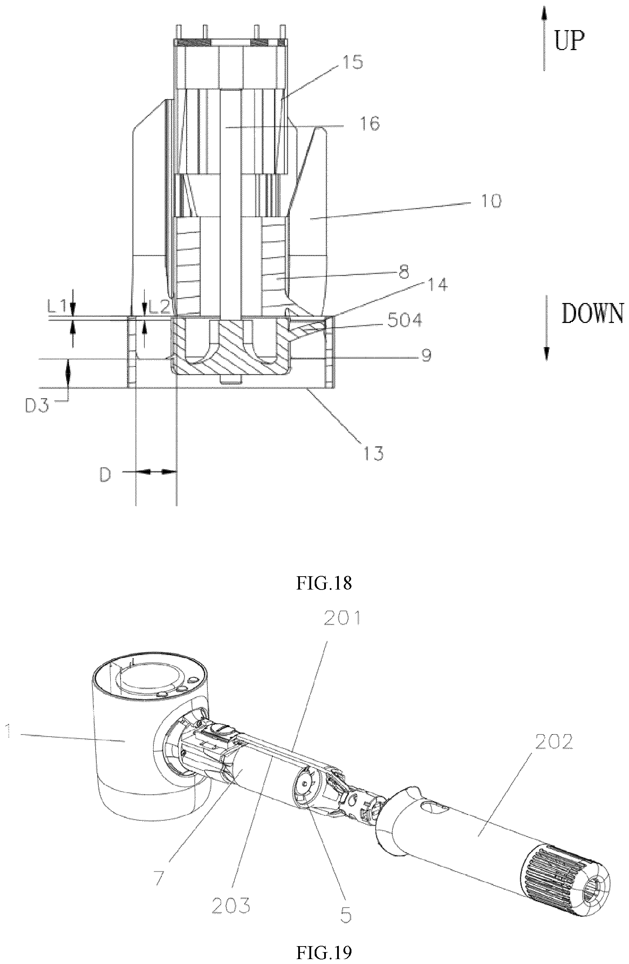

As shown in FIG. 10 - FIG. 20, a hair dryer, comprising a housing 1, a handle assembly 2 connected with the housing 1, an air inlet 3, an air outlet 4, a fan unit 5 for drawing airflow from the air inlet 3 into the internal part of the hair dryer, and a heating unit 6 for heating the airflow, the fan unit 5 comprises a fan blade 502 and a motor 501 for driving the fan blade 502 to rotate, wherein the motor 501 comprises a rotor assembly 16 and a stator assembly 15, wherein, the motor 501 also comprises a bracket for supporting the rotor assembly 16 and the stator assembly 15, and the rotor assembly 16 is connected with a fan blade 502 and drives the fan blade 502 to rotate; the bracket comprises a first cylinder 8 for supporting the rotor assembly 16 and a second cylinder 9 for housing the fan blade 502; the first cylinder 8 is arranged on one side of the second cylinder 9 and is connected with the second cylinder 9 by the connecting rib 10; the hair dryer also comprises an air guide duct 7, the second cylinder 9 comprises an air inlet side 13 and an air outlet side 14, and the fan blade 502 rotates to make the airflow enter the second cylinder 9 from the air inlet side 13 and enter the air guide side from the air outlet side 14.

The first cylinder 8, the second cylinder 9 and the connecting rib 10 are formed an integrated body, the bracket can be made of plastic or metal material, the metal material is preferred, especially aluminum and zinc.

The motor 501 can be arranged in the handle assembly 2, the air inlet 3 is arranged on the handle assembly 2, and the motor 501 is located above the air inlet 3, the axis of the motor 501 is as same as the axis of the handle assembly 2, and the air inlet side 13 is closer to the air inlet 3, when the fan blade 502 rotates, the airflow enters the second cylinder 9 from the air inlet 3, and the air inlet 3 is located under the air inlet side 13 of the second cylinder 9, and the first cylinder 8 is located above the second cylinder 9; the motor 501 can also be arranged in the housing 1, the air inlet 3 is arranged at the rear end of the housing 1, the axis of the motor 501 is as same as the axis of the housing 1, the air inlet side 13 of the second cylinder 9 is closer to the air inlet 3, and the first cylinder 8 is located on the left side of the second cylinder 9. In both cases, the air outlet 4 is arranged at the front end of the housing 1.

It should be pointed out that "up", "down", "left" and "right" mentioned in the present invention are relative reference directions. When the reference changes, "up", "down" or "left" and "right" can be interchanged; and "up" and "left", "down" and "right" may refer to the same direction.

The second cylinder 9 is located in the air guide duct 7, and the second cylinder 9 can be completely or partially located in the air guide duct 7; when the second cylinder 9 is completely located in the air guide duct 7, the end of the air guide duct 7 close to the air inlet 3 is located above or on the left side of the air inlet 3, which depends on whether the air inlet 3 is arranged on the handle assembly 2 or the housing 1. This scheme can make the airflow enters the second cylinder 9 directly into the air guide duct 7 to reduce the air resistance and the air volume loss. The air guide duct 7 and the first cylinder 8 define the airflow channel 12. The fan blade 502 rotates to make the airflow enter the second cylinder 9 from the air inlet side 13 and enter the airflow channel 12 through the air outlet side 14. The air guide duct 7 and the first cylinder 8 define a annular airflow channel 12, and the inner wall of the air guide duct 7 and the outer wall of the first cylinder 8 are used to conduct diversion to reduce the air volume loss. The air guide duct 7 can be a silicone tube, and a gap between the connecting rib 10 and the silicone tube; the air guide duct 7 can also be a plastic pipe or a metal pipe, the connecting ribs 10 are in interference fit with the air guide duct 7, and the airflow from the second cylinder 9 is guided by the inner wall of the air guide duct 7, the connecting ribs 10 and the outer wall of the first cylinder 8.

Another scheme is a certain gap between the second cylinder 9 and the air guide duct 7, that is, the second cylinder 9 is located outside the air guide duct 7, and the second cylinder 9 is closer to the air inlet 3 than the air guide duct 7.

Another scheme is the air guide duct 7 is also provided with a third cylinder 11 connected with the air guide duct, the third cylinder 11 defines the airflow channel 12, and the fan blade 502 rotates to make the airflow enter the second cylinder 9 from the air inlet side 13 and enter the airflow channel 12 through the air outlet side 14. The third cylinder 11 can be integrated with the air guide duct 7 or separated from the air guide duct 7. When the third cylinder 11 and the air guide duct 7 are integrated, the third cylinder 11 is a high temperature resistant plastic part, and the air guide duct 7 is a silicone tube, and the air guide duct 7 and the third cylinder 11 are injection molded; the high temperature resistant plastic part is PA66+30GF, and the hardness of the silicone rubber tube is 55 degrees or above, so as to ensure that the air channel limited by the air guide duct 7 is not deformed. The third cylinder 11 adopts the high temperature resistant plastic part, which has advantages of convenient structure on the third cylinder 11 and improvement of assembly accuracy. It can be understood that the third cylinder 11 can also be a metal part, the air guide duct 7 is a silicone tube, and the third cylinder 11 is preferably made of zinc material to reduce the working noise of the motor 501. The third cylinder 11 is separated from the air guide duct 7, the third cylinder 11 is assembled with the bracket first, and then the motor 501 is installed into the air guide duct 7.

The inner diameter of the second cylinder 9 is larger than the outer diameter of the first cylinder 8, and the airflow is blown out from the air outlet side 14 and guided by the outer wall of the first cylinder 8 into the air guide duct 7.

The difference between the outer diameter of the first cylinder 8 and the inner diameter of the second cylinder 9 is D, 1mm≤D≤50mm, which has advantages of reducing the air resistance and increasing the air volume; when D<1mm, requirement of the process accuracy is high, the process difficulty is increased, the system is difficult to adapt, and the cost is increased; when D>50mm, the volume of the motor 501 is increased and slightly bulky, the use experience and the aesthetic feeling are reduced, and the air volume and air pressure are reduced. D=13mm is preferred.

The inner diameter of the second cylinder 9 is D1, 20mm≤D1≤60mm, which has advantage of obtaining appropriate air volume; when D1 < 20 mm, the air volume obtained is low, which may not meet the demand; when D1>60mm, the motor 501 is too large, bulky and costly.

The inner diameter of the first cylinder 8 is D4, 1.5mm≤D4<20mm. advantages are to provide a installation space and support for the bearing of the rotor assembly 16, and increase the air inlet volume; when D4<1.5mm, due to technical limitations, it is difficult to find a bearing with appropriate size, which increases the cost; when D4>20mm, the air resistance increases, resulting in the air volume loss and the reduction of the air volume.

The outer diameter of the first cylinder is D5, 3.5mm≤D5<23mm. advantages are to provide a installation space and enough strength support for the bearing of the rotor assembly 16, and increase the air inlet volume; when D5<3.5mm, due to technical limitations, it is difficult to find a bearing with appropriate size, which increases the cost, and the wall thickness of the first cylinder 8 is too thin to provide reliable support for the rotor assembly 16, and matching accuracy of the fan blade 502 and the second cylinder 9 cannot be guaranteed; When D5>23mm, the air resistance increases, resulting in the air volume loss and the reduction of the air volume; D1=28mm, D4=12mm and D5=15mm are preferred.

A gap between the fan blade and the side wall of the second cylinder is D2, 0mm<D2≤5mm, advantages are to reduce the noise and obtain the larger air pressure; When D2>5mm, the cavity is easy to release pressure and air noise is large.

A distance between the edge of the fan blade near the lower end of the second cylinder and the lower end of the second cylinder is D3, 0mm≤D3≤10mm, advantages are to keep the inlet volume, when D3 > 10mm, the air inlet volume per unit time will be greatly affected, which reduce the air inlet volume per unit time, which may not meet the demand.

A part of the first cylinder 8 extends into the second cylinder 9; or, end of the first cylinder 8 close to the air outlet side 14 is flush with the air outlet side 14; or, the end of the first cylinder 8 close to the air outlet side 14 is located on a side of the air outlet side 14.

The distance between the air outlet side 14 of the second cylinder 9 and the end of the first cylinder 8 close to the air outlet side 14 is h, 0 mm≤h≤5 mm, which ensures connection strength of the first cylinder 8 and the second cylinder 9, and occupies internal space of the second cylinder 9 as little as possible; when h>5 mm, the connection strength of the first cylinder 8 and the second cylinder 9 may be reduced, and deformation is easy to occur during operation of the motor 501, the air volume and the air pressure are affected, or the volume of the second cylinder 9 is enlarged, the volume of the motor 501 is increased, and installation space required is larger.

End of each connecting rib 10,which is close to the air outlet side 14 , extends into the second cylinder 9; or, the end of the connecting rib 10,which is close to the air outlet side 14 of the second cylinder 9 , is flush with the air outlet side 14 of the second cylinder 9.

The distance between lower end of the connecting ribs 10 and the outlet side 14 is H, 0≤H≤5mm, advantages are that the connection strength of the first cylinder 8 and the second cylinder 9 is improved, the connecting rib 10 are not easy to deform during working process of the motor 501, and impactions on the air volume and the air pressure are reduced; when H> 5mm, the connecting rib 10 need to extend into the second cylinder 9, in order to avoid interference between the connecting rib 10 and the fan blade 502, increasing the volume of the second cylinder 9 and the installation space occupied by the motor 50.

The height between the connecting rib 10 and the outer wall of the first cylinder 8 is H1, 3mm≤H1≤10mm, which can improve the connection strength of the first cylinder 8 and the second cylinder 9, the connecting rib 10 can be used for diversion to reduce the air volume loss; when H1<3mm, the connection strength of the first cylinder 8 and the second cylinder 9 is not enough, which is easy to deform during working; when H1>10mm, the volume of the motor 501 is increased and the cost is increased. It is preferred that H =8mm.

Each connecting rib 10 includes an arc section 1001 which is close to the air outlet side 14, and the arc section 1001 has an inner concave part 1003 corresponding to the rotation direction of the fan blade 502, through this configuration, when the airflow enters the airflow channel 12 from the first cylinder 8, the air volume loss is reduced. The connecting rib 10 also include a vertical section 1002 connected with the arc section 1001, the vertical section 1002 is parallel to the center line of the first cylinder 8, advantages are that the vertical section 1002 guides the airflow to blow out from the airflow channel 12 along the direction of the center line of the upper cylinder, the motor 501 is installed inside the hair dryer, which is generally installed concentric with the handle assembly 2 or the housing 1, the vertical section 1002 can reduce the air volume loss and the air pressure loss. A smoothly transition is between the arc section 1001 and the vertical section 1002.

The thickness of the connecting rib 10 is d, 0.1mm≤d≤3mm, which can ensure the connection strength of the first cylinder 8 and the second cylinder 9, and reduce the air resistance loss and the air volume loss; when d≤0.1 mm, the connecting rib 10 are too thin to ensure the connection strength of the first cylinder 8 and the second cylinder 9, the rotor assembly rotates during operation of the motor, the connecting ribs are easy to be deformed, which increases the air resistance and may change the airflow direction, resulting in the air volume loss and the air pressure loss; when d>3 mm, the air resistance is large and resonance is easy to occur. d=0.1 mm is preferred.

The number of the connecting ribs is N, 4≤N≤12, which can guide the airflow, obtain an appropriate air direction, reduce the air resistance and the air volume loss, and ensure connection reliability between the first cylinder and the second cylinder; when N<4, during the rotor assembly working, a large torque may be generated, which may lead to deformation of the connecting rib, thus increasing the air resistance, changing the airflow direction, resulting in the air volume loss and the air pressure loss; when N>12, the number of the connecting ribs is too large, which increases the air resistance and results in the air volume loss. N=9 is preferred.

The distance between the edge of the fan blade 502 near the outlet air side 14 and the outlet air side 14 is L1, 0.1mm≤L1≤20mm, advantages are that the airflow entering the second cylinder 9 is rectified at this distance to improve the air pressure; when L1≤0.1mm, it can not be effectively adjusted, the air pressure is not improved obviously, and a part of the airflow without rectification enters the air guide duct from the air outlet side and collides with the inner wall of the air guide duct, which resulting in the air volume loss; When L1>20 mm, the distance is too long, and the airflow can not enter into the air guide duct smoothly, which will affect air inlet volume. L1=2 mm is preferred.

The distance between the edge of the fan blade 502 near the outlet side 14 and the end of the connecting rib 10 close to the outlet side 14 is L2, 0.1mm≤L2≤20mm, which can obtain an appropriate air pressure, and rectify the airflow enters the second cylinder 9 through the distance, so as to reduce the air volume loss and the air pressure loss; when L2<0.1 mm, the rectification can't be carried out effectively, and effect of improving the air pressure is not obvious, and a part of the airflow without rectification may enter into the air guide duct 7 from the outlet side 14 and collide with the inner wall of the air guide duct 7, which resulting in the air volume loss; when L2>20 mm, the distance is too long, and the airflow gathers in the second cylinder 9, which can't smoothly enter into the air guide duct 7, the air inlet volume is impacted. Preferred, L2 = 2mm.

The upper end of the connecting rib 10 exceeds the upper end-face of the first cylinder 8 to guide the airflow and reduce the air volume loss, the stator assembly 15 is located on the side of the first cylinder 8 far away from the end of the air outlet side 14, the connecting rib 10 is arranged around the stator assembly 15 to miniaturize the motor 501, the connecting rib 10 is in interference fit with the stator assembly 15, and the side wall of the stator assembly 15 is provided with grooves or convex rib, which corresponding to convex rib or grooves provided to the inner side of the connecting rib, and the stator assembly 15 is fixed through the interference fit of the grooves and the convex rib, and advantages are simple structure and reliable fixation.

The rotor assembly 16 comprises a magnet 1601 located above the first cylinder 8, and the magnet 1601 extends into the stator assembly 15. The rotating speed of the rotor assembly 16 is n, 80000rpm≤n≤130000rpm, preferably n = 11000rpm to gain a larger air volume and a larger air pressure .

The first cylinder 8, the second cylinder 9 and the connecting rib 10 are made of metal, and zinc alloy is preferred to absorb and reduce the noise; or aluminum alloy is selected with light weight.

Further, the motor 501 is arranged in the handle assembly 2, the handle assembly 2 comprises an inner handle 201 and an outer handle 202 sheathed outside the inner handle 201. The inner handle 201 has an opening 203, the motor 501 is arranged in the opening 203, and the outer handle 202 covers the opening 203.

Alternatively, the handle assembly 2 comprises an inner handle 201 and an outer handle 202 sheathed outside the inner handle 201, the inner handle 201 comprises a first inner handle 204, 201 and a second inner handle 205, 201 split along the axis direction, and the motor 501 is arranged in the inner handle 201.

### Embodiment 6

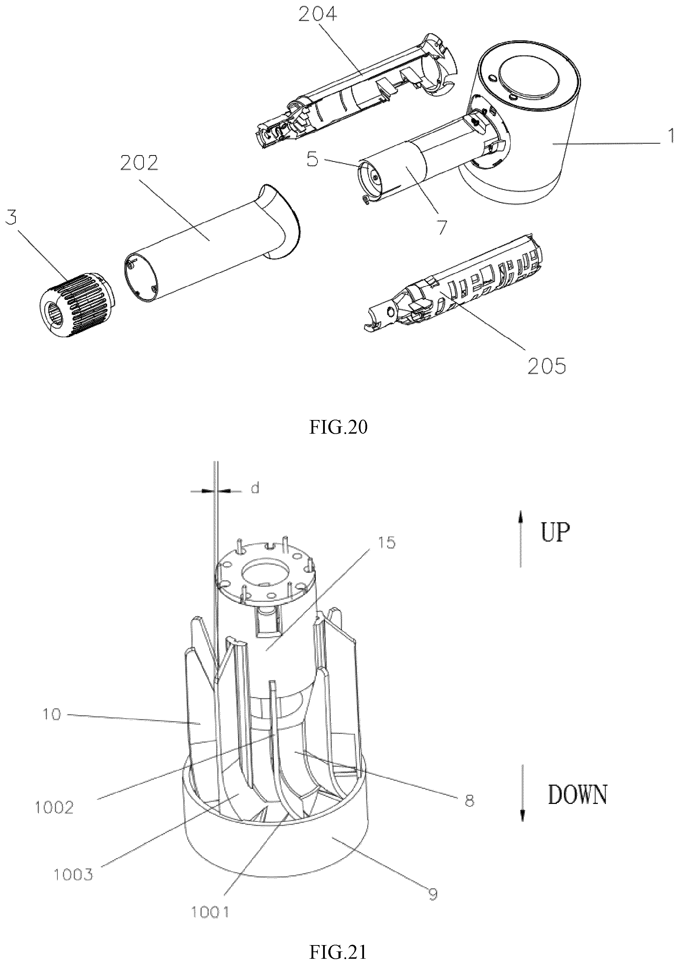

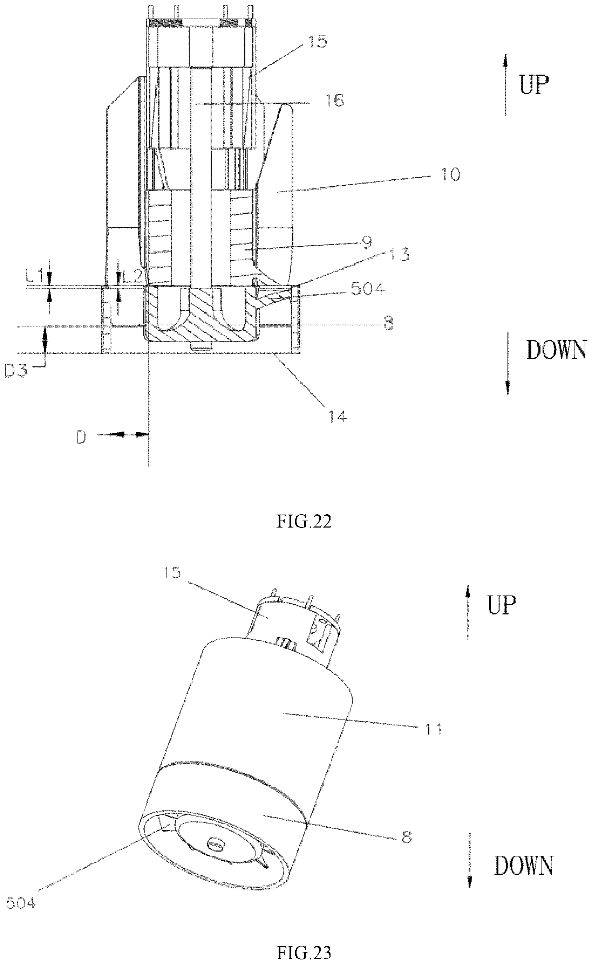

The difference between the embodiment 6 and the embodiment 5 is that, as shown in FIG. 21 and FIG. 22, the second cylinder 9 comprises an air inlet side 13 and an air outlet side 14, and the first cylinder 8 is arranged on the air inlet side 13 of the second cylinder 9.

The motor 501 can be arranged in the handle assembly 2, the air inlet 3 is arranged on the handle assembly 2, and the motor 501 is located above the air inlet 3. The axis of the motor 501 is as same as that of the handle assembly 2, and the air inlet side 13 is closer to the air inlet 3, when the fan blade 502 rotates, the airflow enters the second cylinder 9 from the air inlet 3, and the air inlet 3 is located under the air inlet side 13 of the second cylinder 9, and the first cylinder 8 is located below the second cylinder 9; the motor 501 can also be arranged in the housing 1, the air inlet 3 is arranged at the rear end of the housing 1, the axis of the motor 501 is as same as that of the housing 1, the air inlet side 13 of the second cylinder 9 is closer to the air inlet 3, and the first cylinder 8 is located on the right side of the second cylinder 9. In both cases, the air outlet 4 is arranged at the front end of the housing 1.

In the embodiment 6, a part of the first cylinder 8 extends into the second cylinder 9; or, the lower end of the first cylinder 8 is flush with the upper end of the second cylinder 9, that is, the end of the first cylinder 8 close to the air inlet side 13 of the second cylinder 9 is flush with the air inlet side 13 of the second cylinder 9; or, the lower end of the first cylinder 8 is located above the second cylinder 9, that is, a gap between the end of the first cylinder 8 close to the air inlet side 13 of the second cylinder 9 and the air inlet side 13 of the second cylinder 9. The connecting ribs 10 extend into the second cylinder 9; or, the lower ends of the connecting ribs 10 is flush with the upper end of the second cylinder 9, that is, the ends of the connecting rib 10 close to the air inlet side 13 of the second cylinder 9 are flush with the air inlet side 13 of the second cylinder 9.

"Upper end" and "lower end" are related to the reference direction. In this example, "lower end" refers to the end close to the air inlet side 13, "upper end" refers to the end far away from the air inlet side 13; "upper end of the second cylinder 9" refers to the inlet side 13 of the second cylinder 9, and the "lower end of the second cylinder 9" refers to the air outlet side 14 of the second cylinder 9. In the embodiment 6, "up" and "down" are opposite to those in the embodiment 1, and the embodiment 2 can be obtained by reversing the "up" and "down" directions in the embodiment 1.

In the embodiment 6, the motor is set in the handle assembly 2, the first cylinder 9 is closer to the air inlet 3 than the second cylinder 8. The setting mode of the motor in the embodiment 6 in the handle assembly 2 is referred to the embodiment 1.

### Embodiment 7

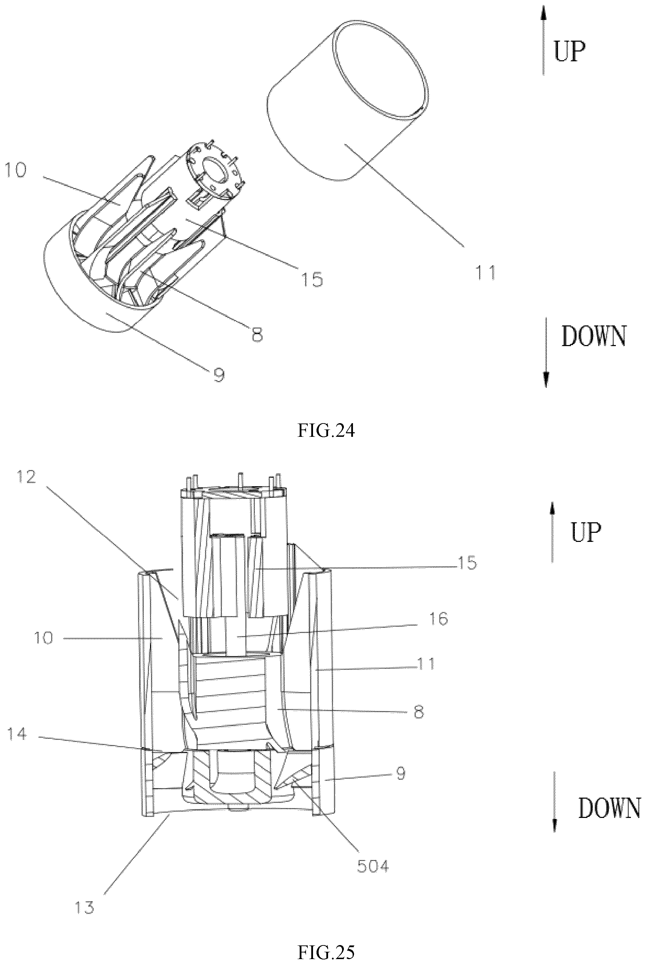

The difference between the embodiment 7 and any embodiment mentioned above is that, as shown in FIG. 23-FIG. 25, the hair dryer also comprises a third cylinder 11 for fixing the motor 501, the third cylinder 11 and the first cylinder 8 define the airflow channel 12, and the third cylinder 11 is separated from the bracket.

When the fan blade 502 rotates, the airflow from the air inlet 3 into the hair dryer enters the airflow channel 12 first and then into the second cylinder 9; or the airflow entering the hair dryer from the air inlet 3 first enters the second cylinder 9 first, and then enters the airflow channel 12.

Further, the second cylinder 9 comprises the air inlet side 13 and the air outlet side 14, and the fan blades 502 rotate to make the airflow enter the second cylinder 9 from the air inlet side 13 and enter the airflow channel 12 through the air outlet side 14.

The third cylinder 11 comprises a butting part which is against the second cylinder 9. The butting part can be the end-face of the third cylinder 11, the step surface of the inner wall of the third cylinder 11, or the inner wall of the third cylinder 11.

The butting part is at least in contact with the upper end-surface of the second cylinder 9, more specifically, the inner wall of the third cylinder 11 is against the outer wall of the second cylinder 9, the step surface of the inner wall of the third cylinder 11 is against the upper end-face of the second cylinder 9, or the lower end-face of the third cylinder 11 is against the upper end-face of the second cylinder 9. The inner diameter of the third cylinder 11 against the second cylinder 9 equals to the inner diameter of the second cylinder 9; further, the inner diameter of the third cylinder 11 is as same as the inner diameter of the second cylinder 9.

The upper end-face of the first cylinder 8 is located in the third cylinder 11; or, the upper end-face of the first cylinder 8 is flush with the upper end-face of the third cylinder 11; or, the upper end-face of the first cylinder 8 is higher than the upper end-face of the third cylinder 11.

The tails of the connecting ribs 10 exceed the upper end-face of the third cylinder 11 or is flush with the upper end-face of the third cylinder 11.

The third cylinder 11 is set on the outside of the second cylinder 9, the inner wall of the third cylinder 11 is in interference fit with the connecting rib 10, or the third cylinder 11 is in interference fit with the second cylinder 9, or the third cylinder 11 is in interference fit with both the second cylinder 9 and the connecting rib 10, or the third cylinder 11 and the second cylinder 9 are connected by screws and interference fit with the connecting rib 10 to realize fixation of the motor 501; when the third cylinder 11 and the second cylinder 9 are connected and fixed by screws, the second cylinder 9 is provided with a lug, the third cylinder 11 is provided with a threaded hole matched with the lug, and the motor 501 is fixed on the third cylinder 11 through the lug, the threaded hole and the screws. The third cylinder 11 is wrapped with a sound insulation cylinder made of zinc material. The fan unit 5 in this embodiment has a relatively large volume and is more suitable for being set in the housing 1.

The hair dryer also comprises the air guide duct 7, and the third cylinder 11 is arranged in the air guide duct 7.

The air guide duct 7 is a silicone tube, and the third cylinder 11 is a high temperature resistant plastic part or a sound-absorbing metal part.

It can be understood that the gap M between the connecting blade and the third cylinder 11 is not more than 2 mm. In this embodiment, the third cylinder 11 is connected with the second cylinder 9, and the vibration transmission is reduced due to the gap L when the motor 501 is working; when the gap is greater than 2 mm, the installation space of the motor 501 needs a larger installation space, which making the whole machine appear bulky, or sacrificing airflow guidance effect of the connecting rib 10.

In this example, the "upper end" and "lower end" are related to the reference direction. The second cylinder 9 comprises the inlet side 13 and the outlet side 14, airflow enters the second cylinder 9 from the air inlet side 13 and blows out from the air outlet side 14 of the second cylinder 9, when the first cylinder 8 is set on the air outlet side 14 of the second cylinder 9, "upper end" refers to the end far away from the air outlet side 14; "lower end" refers to the end close to the air outlet side 14 The upper end of the second cylinder 9 refers to the air outlet side 14 of the second cylinder 9, and the lower end of the second cylinder 9 refers to the air inlet side 13 of the second cylinder 9. When the first cylinder 8 is set on the air inlet side 13 of the second cylinder 9, the "upper end" refers to the end far away from the air inlet side 13; "the lower end" refers to the end close to the air inlet side 13; "the upper end of the second cylinder 9" refers to the air inlet side 13 of the second cylinder 9, and the "lower end of the second cylinder 9" refers to the air outlet side 14 of the second cylinder 9.

### Embodiment 8

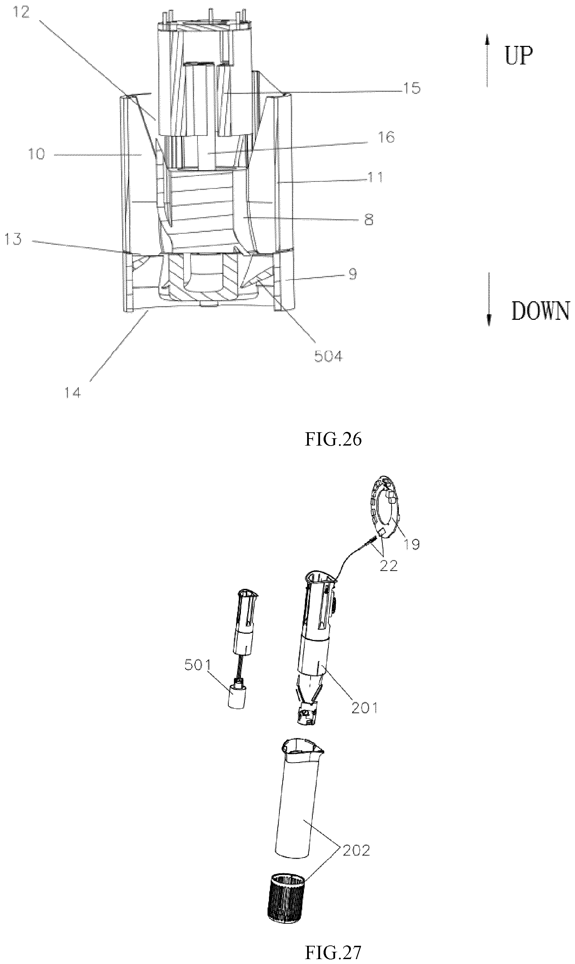

The difference between the embodiment 8 and the embodiment 7 is that, as shown in FIG. 26, the second cylinder 9 comprises the air inlet side 13 and the air outlet side 14, and the first cylinder 8 is arranged on the air inlet side 13 of the second cylinder 9, in this case, the first cylinder 8 is closer to the air inlet 3 to reduce the air resistance after the airflow is blown out from the air outlet side 14 and reduce the air volume loss and the air pressure loss.

The first cylinder 8 is provided with a third cylinder 11 connected in it, the rotor assembly 16 is arranged in the third cylinder 11, the inner diameter of the first cylinder 8 is larger than the outer diameter of the second cylinder 9, and the outer diameter of the third cylinder 11 is smaller than the inner diameter of the second cylinder 9, so the air pressure can be increased by reducing cross-sectional area.

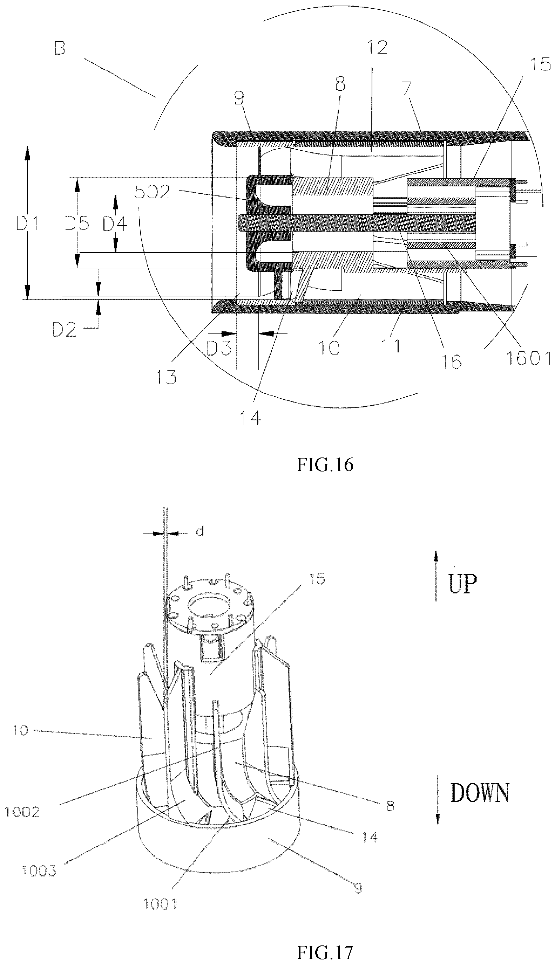

The third cylinder 11 may be connected with the second cylinder 9; or the third cylinder 11 may be connected with the first cylinder 8. The first cylinder 8 and the second cylinder 9 can be butted against each other in the direction along the axis (as shown in FIG. 17); or the first cylinder 8 and the second cylinder 9 can be spaced by a certain distance along the axis direction.

### Embodiment 9

Compared with the embodiments 1 to 8, the motor in the embodiment 9 adopts a motor with a conductive layer 18.

As shown in FIG. 5 and FIG. 10, the hair dryer of the embodiment 9 comprises the housing 1, the handle assembly 2 connected with the housing 1, the air inlet 3, the air outlet 4, the motor 501 for drawing airflow from the air inlet 3 into the hair hair dryer, and the heating unit for heating the airflow (not shown in the figure). The hair dryer also comprises an EMC shielding structure, and the EMC shielding structure comprises a circuit board 19 for controlling the hair dryer and the conductive layer 18 electrically connected with the circuit board 19, the motor 501 is electrically connected with the circuit board 19, and the circuit board 19, the conductive layer 18 and the power line form a closed-loop circuit.

EMC is electromagnetic compatibility, which means that a equipment or a system can work normally in a electromagnetic environment and no electromagnetic disturbance occurs in the environment. The circuit board 19, the conductive layer 18 and the power line form a closed-loop circuit, an electromagnetic radiation signal generated by the motor 501 during operation is received by the conductive layer 18 and transmitted to the corresponding terminal on the circuit board (the terminal can be a grounding potential on the circuit board 19, or an input end of an EMC filter circuit set on the circuit board 19), so as to achieve the purpose of electromagnetic radiation absorption. The conductive layer 18 is connected with the circuit board 19 through the wire 20, both the wire 20 and the circuit board 19 are provided with a wiring terminal 22 for convenient connection.

The motor 501 can be located in the handle assembly 2 or in the housing 1. When the motor 501 is located in the housing 1, according to position and direction of the motor 501, the fan blade 502 can be located in the housing 1 or in the handle assembly 2. When the motor 501 is arranged in the handle assembly 2, both the motor 501 and the fan blade 502 are located in the handle assembly 2.

Position of the air inlet 3 is determined according to the position of the motor 501, when the motor 501 is set in handle assembly 2, the air inlet 3 is set on handle assembly 2; when the motor 501 is set in the housing 1, the air inlet 3 is set at the rear end of the housing 1. In the two schemes, the air outlet 4 is always arranged at the front end of the housing 1.

As shown in FIG. 27, the power line 21 is located in the handle assembly 2, the handle assembly 2 comprises the inner handle 201 and the outer handle 202 sheathed outside the inner handle 201, and the conductive layer 18 is arranged between the inner handle 201 and the outer handle 202; the motor 501 can be located in the handle assembly 2 or in the housing 1, and position of the power line 21 can be changed depends on its length, the position of the motor 501, the position of the circuit board 19 and the length of the power line 21 wrapped by the conductive layer 18. For example, when the motor 501 is arranged in the housing 1 and the circuit board 19 is arranged in the handle assembly 2, according to the position and the direction of the motor 501 in the housing 1, the power line 21 of the motor 501 can be completely or partially located in the handle assembly 2.

It can be understood that the power line 21 is located in the handle assembly 2, the handle assembly 2 comprises the inner handle 201 and the outer handle 202 sheathed outside inner handle 201, and the conductive layer 18 is arranged in the inner handle 201.

It can be understood that the power line 21 is located in the handle assembly 2, the handle assembly 2 comprises the inner handle 201 and the outer handle 202 sheathed outside inner handle 201, the inner handle 201 is at least partially made of metal, and the conductive layer 18 is the inner handle 201.

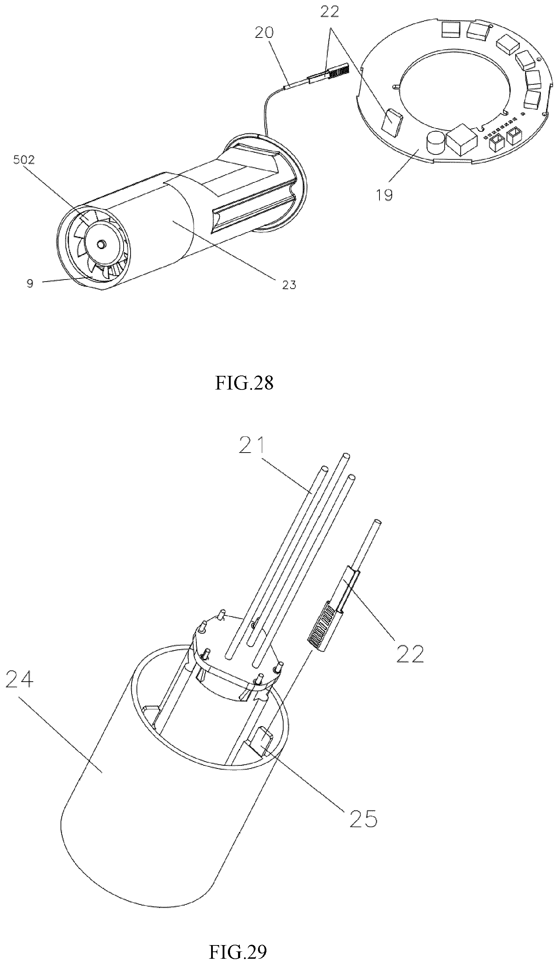

It can be understood that, as shown in FIG. 28, the conductive layer 18 is a conductive hose 23, and the conductive hose 23 is sheathed outside the motor 501. The conductive hose 23 can be a conductive medium such as a soft glue doped with silver powder, or a soft glue coated with a conductive coating layer. The conductive hose 23 can not only be used as a medium for receiving the electromagnetic radiation signal, but also be used for the shock absorption and the noise reduction, the airflow sucked by the motor 501 directly enters the conductive hose 23, so as to reduce the air volume loss and the air pressure loss. According to the position of the motor 501, the conductive hose 23 can be set in the handle assembly 2 or in the housing 1.

The conductive layer 18 and the circuit board 19 are arranged in the handle assembly 2; or both the conductive layer 18 and the circuit board 19 are arranged in the housing 1; or the conductive layer 18 and the circuit board 19 are respectively located in the handle assembly 2 and the housing 1; or the conductive layer 18 and the circuit board 19 are respectively located in the housing 1 and the handle assembly 2. In this embodiment, the conductive layer 18 and the circuit board 19 are preferably arranged in the handle assembly 2 and the housing 1 respectively, so as to improve utilization rate of the internal space of the hair dryer and make internal structure more compact.

The circuit board 19 is provided with an EMC filtering circuit, and the electromagnetic radiation signal received by the conductive layer 18 from the motor 501 is transmitted to the input end of the EMC filtering circuit. The electromagnetic radiation signal is processed by the EMC filter circuit to achieve the purpose of absorbing the electromagnetic radiation.

The preferred embodiment is that the motor 501 is arranged in the handle assembly 2, the circuit board 19 is located in the housing 1, and the power line of the motor 501 extends from the handle assembly 2 to the housing 1. The handle assembly 2 comprises the inner handle 201 and the outer handle 202 sheathed on the outside. The conductive layer 18 is arranged between the inner handle 201 and the outer handle 202. The conductive layer 18 is a aluminum foil layer, the aluminum foil layer covers the inner handle 201 and can wrap the whole length of the inner handle 201, the motor 501 (comprising the power line of the motor 501) is wrapped by the aluminum foil layer; the aluminum foil layer can also wrap a part of the inner handle 201 and wrap the power line 21.

In addition, when the motor 501 is arranged inside the housing 1, the conductive layer 18 can be made of metal as same as the housing 1, or a conductive coating layer on the inner wall of the housing 1, or a conductive part arranged inside the housing 1 to at least wrap the power line 21. Wherever the motor 501 is located in the handle assembly 2 or the housing 1, the air guide duct 18 can be sheathed outside the motor 501 to reduce the air volume loss and the air pressure loss. The difference between the air guide duct 18 and the conductive hose 23 shown in FIG. 5 is that the air guide duct 18 can be non-conductive, and the air guide duct 18 is a silicone hose. When the air guide duct 18 is conductive, it becomes a conductive hose 23, and the structure for realizing electromagnetic radiation shielding can refer to FIG. 5.

### Embodiment 10

The difference between the embodiment 10 and the embodiment 9 is that, as shown in FIG. 29, the motor 501 comprises a metal housing 24, the conductive layer 18 is the metal housing 24, the metal housing 24 is provided with a ground terminal 25, and the grounding terminal 25 is electrically connected with the circuit board 19. The electromagnetic radiation signal of the motor 501 is transmitted to the circuit board 19 through the metal housing 24, so as to realize the purpose of absorbing the electromagnetic radiation. The grounding terminal 25 and the circuit board 19 can be electrically connected through wiring terminal 22, riveting, or welding, etc.

In this embodiment, the EMC shielding structure also comprises the wiring terminal 22, which is connected with the grounding terminal 25. The structure of the wiring terminal 22 is simple and easy to realize, the wall thickness of the wiring terminal 22 is small, and the diameter of the motor 501 will not be increased; especially when the housing 1 is made of zinc, the electrical connection between the grounding terminal 25 and the circuit board 19 through the wiring terminal 22 is more convenient.

The grounding terminal 25 is a convex rib or a groove arranged on the side wall of the metal housing 24, and the wiring terminal 22 is connected with the convex rib or the groove by buckles.

It can be understood that the metal housing 24 is provided with a notch arranged along its axis, and the notch is provided with a convex part with a through hole, and the grounding terminal 25 is the convex part.

The difference between the present embodiment and the embodiment 9 or the embodiment 10 is that the present embodiment is the combination of the embodiment 9 and the embodiment 10.

In this embodiment, the motor is arranged in the handle assembly 2, the motor 501 comprises the magnet, the bearing assembly, the fan blade 502 and the shaft; the stator assembly 20 comprises a stator core and a spool; the motor 501 also comprises the bracket, the bracket comprises the first cylinder 8 and the second cylinder 9, the first cylinder 8 and the second cylinder 9 are connected through the connecting rib 10; the first cylinder 8 defines a through hole for supporting the rotor assembly 16; the second cylinder 9 defines a accommodation space for accommodating the fan blade 502. The circuit board 19 is located in the housing 1, and the power line of the motor 501 extends from the handle assembly 2 to the housing 1.

The handle assembly 2 comprises the inner handle 201 and the outer handle 202 sheathed on the outside of the inner handle 201, the conductive layer 18 is arranged between the inner handle 201 and the outer handle 202, the conductive layer 18 is a aluminum foil layer ,which covers the inner handle 201 and can wrap the inner handle 201 entirely, the motor 501 (comprising the power line of the motor 501) is wrapped by the aluminum foil layer; the aluminum foil layer can also wrap a part of the inner handle 201 and wrap the power line.

Moreover, the motor 501 comprises the metal housing 24, and the conductive layer 18 comprises the metal housing 24 provided with the grounding terminal 25, which is electrically connected with the circuit board 19. The electromagnetic radiation signal of the motor 501 is transmitted to the circuit board 19 through the metal housing 24, so as to realize the purpose of absorbing the electromagnetic radiation. The grounding terminal 25 and circuit board 19 can be electrically connected by the wiring terminal 22, riveting, or welding, etc.

### Embodiment 11

In this embodiment, the motor 501 of the hair dryer is involved, in which the second cylinder 9 is a metal part, and the second cylinder 9 is provided with a grounding terminal 25, which is electrically connected with the circuit board 19 of the hair dryer.

The grounding terminal 25 is a convex rib or a groove arranged on the side wall of the second cylinder 9; or, the second cylinder 9 has a gap arranged along its axial direction, the gap is provided with a convex part with a through hole, and the grounding terminal 25 is the convex part.

Or with the assembly scheme, the conductive layer and the circuit board are arranged in the handle assembly;

Or, both the conductive layer and the circuit board are arranged in the housing;

Or, the conductive layer and the circuit board are respectively located in the handle assembly and the housing;

Or,, the conductive layer and the circuit board are respectively located in the housing and the handle assembly.

To sum up, further, "wind blade" in the invention can also be called "fan blade", for example, in Chinese patent application No. 201821015027.8, "wind blade" is sometimes also called "fan blade".

In the invention, "connecting bar" can also be called "connecting rib", for example, in Chinese patent application No. 201910109281.7, "connecting bar" can also be called "connecting rib".

Other embodiments of the disclosure will be apparent to those skilled in the art from consideration of the specification and practice of the disclosure here. This application is intended to cover any variations, uses, or adaptations of the disclosure following the general principles thereof and comprising such departures from the disclosure as come within known or customary practice in the art. It is intended that the specification and embodiments be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A motor, comprising a rotor assembly and a stator assembly, wherein the motor further comprises: a bracket for supporting the rotor assembly and the stator assembly, and the rotor assembly is connected with a fan blade;
the bracket comprises a first cylinder for supporting the rotor assembly and a second cylinder for protecting the fan blade;
the first cylinder is connected with the second cylinder, and at least a part of the first cylinder is located outside the second cylinder.

2. The motor of claim 1, wherein the central axis of the first cylinder and the central axis of the second cylinder are located on the same coaxial line, and the second cylinder is located on one side of the first cylinder.

3. The motor of claim 2, wherein the inner diameter of the second cylinder is greater than the outer diameter of the first cylinder.

4. The motor of claim 2, wherein the difference between the outer diameter of the first cylinder and the inner diameter of the second cylinder is D, 1mm≤D≤50mm.

5. The motor of claim 3, wherein the distance between the upper end-face of the second cylinder and the lower end-face of the first cylinder is h, the length of the first cylinder is H, 0≤h/H≤0.5.

6. The motor of claim 4, wherein the length of the part of the first cylinder extending into the second cylinder is L, 0.5mm≤L≤5mm.

7. The motor of claim 1, wherein the first cylinder is connected with the second cylinder by connecting ribs.

8. The motor of claim 7, wherein at least a part of each connecting rib is connected with to the side wall of the first cylinder.

9. The motor of claim 7, wherein the connecting rib comprises an arc section, and the connecting rib also comprises a vertical section connected with the arc section, and the vertical section is parallel to the center line of the first cylinder.

10. The motor of claim 9, wherein the arc section has an inner concave part corresponding to the rotation direction of the fan blade.

11. The motor of claim 7, wherein the stator assembly is located at the side of the first cylinder far away from the upper end-face of the first cylinder, and the connecting rib is in interference fit with the stator assembly.

12. The motor of claim 1, wherein the rotor assembly comprises a shaft, a bearing and a magnet, the bearing and the magnet are arranged on the shaft, the fan blade is connected with the shaft, and the magnet is inserted into the stator assembly.

13. The motor of claim 1, wherein the motor comprises a power line electrically connected with a circuit board for controlling and a conductive layer, the circuit board, the conductive layer and the power line form a closed-loop circuit in a working state.

14. The motor of claim 13, wherein the conductive layer receives an electromagnetic radiation signal from the motor in a non-contact manner.

15. The motor of claim 14, wherein the conductive layer is at least wrapped around the outside of the power line or covered the motor entirely.

16. The motor of claim 13, wherein the conductive layer is one of a conductive coating layer, an aluminum foil layer, or a metal part.

17. The motor of claim 7, wherein the bracket and the fan blade are made of plastic; or the bracket is made of plastic and the fan blade is made of aluminum; or the bracket and the fan blade are made of metal.

18. The motor of any one of claims 1 to 17, wherein the second cylinder also comprises an air inlet side and an air outlet side, the first cylinder is arranged at the air outlet side of the second cylinder; the distance between the edge of the fan blade close to the air outlet side and the air outlet side is L1, 0.1mm≤L1≤20mm.

19. The motor of claim 1, wherein the inner diameter of the second cylinder is D1, 20mm≤D1≤60mm.

20. The motor of claim 1, wherein the inner diameter of the first cylinder is D4, 1.5mm≤D4<20mm.

21. The motor of claim 1, wherein the outer diameter of the first cylinder is D5, 3.5mm≤D5<23mm.

22. The motor of claim 1, wherein a gap between the fan blade and the side wall of the second cylinder is D2, 0mm<D2≤5mm.

23. The motor of claim 1, wherein a distance between the edge of the fan blade near the lower end of the second cylinder and the lower end of the second cylinder is D3, 0mm≤D3≤10mm.

24. The motor of claim 7, wherein the thickness of the connecting ribs is d, 0.1mm≤d≤3mm.

25. The motor of claim 7, wherein the number of the connecting rib is N, 4≤N≤12.

26. The motor of claim 1, wherein the speed of the rotor assembly is n, 70000rpm≤n≤150000rpm.

27. A hair dryer, comprising a housing, a handle assembly connected with the housing, an air inlet, an air outlet, a fan unit for drawing airflow from the air inlet into the internal part of the hair dryer, and a heating unit for heating the airflow, the fan unit comprises a fan blade and an motor for driving the fan blade to rotate, wherein, the motor is claimed in any one of claims 1 to 26;
the motor also comprises a third cylinder which is separated from the bracket, the third cylinder and the first cylinder define an airflow channel.

28. The hair dryer of claim 27, wherein the third cylinder comprises a butting part, and the butting part is against the second cylinder.

29. The hair dryer of claim 28, wherein the butting part is at least in contact with the upper end-face of the second cylinder.

30. The hair dryer of claim 29, wherein the third cylinder and the second cylinder have the same inner diameter at the parts where the both are contacted with each other.

31. The hair dryer of claim 27, wherein the upper end-face of the first cylinder is located in the third cylinder;
or, the upper end-face of the first cylinder is flush with the upper end-face of the third cylinder;
or, the upper end-face of the first cylinder is higher than the upper end-face of the third cylinder.

32. The hair dryer of claim 27, wherein also comprises the connecting ribs which connecting the first cylinder with the second cylinder, and the tail ends of the connecting ribs exceed or are flush with the upper end-face of the third cylinder.

33. The hair dryer of claim 32, wherein also comprises the connecting ribs which connecting the first cylinder with the second cylinder, the third cylinder is in interference fit with the connecting ribs; or, the third cylinder and the second cylinder are fixed by screws.

34. The hair dryer of claim 27, wherein the third cylinder is a high temperature resistant plastic part or a sound-absorbing metal part.

35. The hair dryer of claim 27, wherein also comprises an air guide duct, and the third cylinder is arranged in the air guide duct.

36. The hair dryer of claim 35, wherein the air guide duct is a silicone tube, and the third cylinder is made of a high temperature resistant plastic part or a sound-absorbing metal part.

37. The hair dryer of claim 27, wherein the rotor assembly is arranged in the third cylinder, the inner diameter of the first cylinder is larger than the outer diameter of the second cylinder, and the outer diameter of the third cylinder is smaller than the inner diameter of the second cylinder.

38. A hair dryer, comprising a housing, a handle assembly connected with the housing, an air inlet, an air outlet, a fan unit for drawing airflow from the air inlet into the hair dryer, and a heating unit for heating the airflow, the fan unit comprises a fan blade and an motor for driving the fan blade to rotate, wherein the motor is claimed in any one of claims 1 to 26;
the motor also comprises an air guide duct, and the airflow drawn by the fan unit enters the air guide duct through the second cylinder.

39. The hair dryer of claim 38, wherein the second cylinder comprises an air inlet side and an air outlet side, and the fan blade is rotated to make the air flowed into the second cylinder from the air inlet side and into the air guide duct through the air outlet side.

40. The hair dryer of claim 39, wherein the second cylinder is arranged in the air guide duct.

41. The hair dryer of claim 38, wherein the air guide duct and the first cylinder define an airflow channel, and the fan blade is rotated to make the air flowed into the second cylinder from the air inlet side and entered into the airflow channel through the air outlet side.

42. A hair dryer, comprising a housing, a handle assembly connected with the housing, an air inlet, an air outlet, a fan unit for drawing airflow from the air inlet into the internal part of the hair dryer, and a heating unit for heating the airflow, the fan unit comprises a fan blade and an motor for driving the fan blade to rotate, wherein the motor is claimed in any one of claims 1 to 26;
the motor is arranged in the handle assembly, the air inlet is arranged on the handle assembly, and the air inlet is located under the second cylinder.

43. The hair dryer of claim 42, wherein the second cylinder comprises an air inlet side and an air outlet side, the first cylinder is arranged on the air outlet side of the second cylinder, the motor is arranged in the handle assembly, the air inlet is arranged on the handle assembly, and the air inlet is arranged below the air inlet side.

44. The hair dryer of claim 42, wherein the handle assembly comprises an inner handle and an outer handle arranged on the outside of the inner handle, the inner handle comprises an opening, the motor is arranged in the opening, and the outer handle is covered the opening;
or, the handle assembly comprises an inner handle and an outer handle mounted on the outside of the inner handle, the inner handle comprises a first inner handle and a second inner handle split along the axis direction of the handle assembly, and the motor is arranged in the inner handle.

45. A hair dryer, comprising a housing, a handle assembly connected with the housing, an air inlet, an air outlet, a fan unit for drawing airflow from the air inlet into the internal part of the hair dryer, and a heating unit for heating the airflow, the fan unit comprises a fan blade and an motor for driving the fan blade to rotate, wherein the motor is claimed in any one of claims 13 to 16;
the hair dryer also comprises an EMC shielding structure, the EMC shielding structure comprises a circuit board for controlling the hair dryer, the motor is electrically connected with the circuit board by the power line, the circuit board, the conductive layer and the power line form a closed-loop circuit.

46. The hair dryer of claim 45, wherein the conductive layer comprises a conductive hose which is sheathed outside the motor.

47. The hair dryer of claim 45, wherein the power line is arranged in the handle assembly, the handle assembly comprises an inner handle and an outer handle arranged on the outside of the inner handle, the conductive layer is arranged between the inner handle and the outer handle, or the conductive layer is arranged in the inner handle;
or, the power supply line is arranged in the handle assembly, the handle assembly comprises the inner handle and the outer handle arranged outside the inner handle, and the inner handle is at least partially made of metal, and the conductive layer comprises the inner handle.

48. The hair dryer of claim 45, wherein the motor comprises a metal housing, the conductive layer comprises the metal housing, the metal housing is provided with a grounding terminal, and the grounding terminal is electrically connected with the circuit board.

49. The hair dryer of claim 48, wherein the EMC shielding structure also comprises a wiring terminal, which is connected with the ground terminal.

50. The hair dryer of claim 48, wherein the grounding terminal is a convex rib, or a groove arranged on the side wall of the metal housing;
or, the metal housing has a notch arranged along the axial direction of the metal housing, a convex part with a through hole is arranged in the notch, and the grounding terminal is the convex part.

51. The hair dryer of claim 45, wherein the conductive layer and the circuit board are both arranged in the handle assembly;
or, the conductive layer and the circuit board are both arranged in the housing;
or, the conductive layer and the circuit board are respectively located in the handle assembly and the housing;
or, the conductive layer and the circuit board are respectively located in the housing and the handle assembly.

52. The hair dryer of claim 47, wherein the circuit board is provided with an EMC filter circuit, and an electromagnetic radiation signal from the motor is received by the conductive layer and transmitted to the input end of the EMC filter circuit.
